# EUROPÄISCHE PATENTSCHRIFT

(11) **EP 4 490 406 B1**
(45) Veröffentlichungstag und Bekanntmachung des Hinweises auf die Patenterteilung: **26.11.2025**
(21) Anmeldenummer: 23709364.6
(22) Anmeldetag: 02.03.2023
(51) Int. Cl.: F03D 15/00, F03D 80/70, F03D 80/80

(54) **TRIEBSTRANGLAGERUNGSANORDNUNG MIT MOMENTENABSTÜTZUNG SOWIE DAMIT AUSGESTATTETES INDUSTRIEGETRIEBE SOWIE VERFAHREN ZUM EINSTELLEN EINER TRIEBSTRANGLAGERUNGSANORDNUNG UND VERWENDUNG**
DRIVE ROD SUPPORT ASSEMBLY WITH TORQUE SUPPORT AND INDUSTRIAL GEAR EQUIPPED THEREWITH, AND METHOD FOR ADJUSTING A DRIVE ROD SUPPORT ASSEMBLY AND USE
ENSEMBLE TRAIN D'ENTRAÎNEMENT À SUPPORT DE COUPLE, AINSI QUE TRANSMISSION INDUSTRIELLE ÉQUIPÉE DE CELUI-CI, AINSI QUE PROCÉDÉ DE RÉGLAGE D'UN ENSEMBLE TRAIN D'ENTRAÎNEMENT À SUPPORT DE COUPLE ET UTILISATION

(30) Priorität: 09.03.2022 EP 22160999
(43) Veröffentlichungstag der Anmeldung: 15.01.2025
(73) Patentinhaber: Flender GmbH, 46395 Bocholt (DE)
(72) Erfinder: HAMBRECHT, Ralf, 46395 Bocholt (DE)
(74) Vertreter: Michalski Hüttermann & Partner Patentanwälte mbB
(86) Internationale Anmeldenummer: PCT/EP2023/055250
(87) Internationale Veröffentlichungsnummer: WO 2023/169909

(56) Entgegenhaltungen:
- EP-A1- 2 630 371
- EP-A1- 3 168 464
- CN-A- 113 389 697
- DE-A1- 102007 053 586
- US-A1- 2016 061 191

## Beschreibung

### TECHNISCHES GEBIET

Die Erfindung betrifft eine Windenergieanlage mit einem Industriegetriebe aufweisend eine in einem ersten Gehäuse abgestützte Lagerung für eine Welle des Triebstrangs und eine von einem zweiten Gehäuse umgebene und an die Welle gekoppelte Getriebekomponente und eine Momentenabstützung, wobei die Momentenabstützung zumindest einem auf die Welle wirkenden und seitens der Getriebekomponente schwerkraftbegründeten Moment entgegenwirkt; die Erfindung betrifft ferner einen Triebstrang und ein Industriegetriebe mit einer derartigen Lagerung.

### HINTERGRUND DER ERFINDUNG

Bei Triebsträngen, an denen vergleichsweise massive und große Komponenten miteinander verschaltet sind, wirken allein bereits aufgrund der Schwerkräfte hohe Kräfte, die auch sehr dynamisch auf den Triebstrang und auf die entsprechenden Lagerkomponenten einwirken können. Je nach Dynamik und Lastbereich kann es erforderlich werden, einzelne der Komponenten gegen die Schwerkraft abzustützen und/oder gegen zu starke dynamische Lastspitzen zu sichern. Beispielsweise bei Windenergieanlagen sind die dynamischen Kräfte und Momente insbesondere aufgrund der nicht exakt vorhersehbaren Betriebs- und Witterungsbedingungen besonders einschlägig und belasten die speziell bei Offshore-Anlagen möglichst für eine lange Betriebsdauer ausgelegten Komponenten beträchtlich. Insofern ist eine Verbesserung der bisherigen Bedingungen und Möglichkeiten zur Minimierung strukturell belastender Kräfte und Momente wünschenswert.

Besonderes Augenmerk gilt für einige Anwendungen auch den so genannten Umlaufbiegemomenten: Wird der Triebstrang einseitig durch große Massen mit hoher Hebelwirkung statisch beaufschlagt (beispielsweise zusätzlich zu den dynamischen Windereignissen), so führt dies einer dynamischen Belastung bzw. zyklischen Beanspruchung der rotierenden Bauteile, so z.B. die Rotorwelle, ein Planetenträger insbesondere einer ersten Getriebestufe und/oder rotierende Verbindungselemente z.B. in Flanschausführung durch einen im Durchmesser sehr großen und gegebenenfalls auch mit einer eher nachteiligen Frequenz/Rotationsrate drehenden Rotor einer Windenergieanlage, so kann dies zu sehr heftigen Einwirkungen auf die Struktur und den Maschinenträger und die gesamte Anordnung mitsamt Lagern und etwaigen Kupplungen führen. Es besteht daher ein großes Interesse, derartige Umlaufbiegemomente minimieren zu können, insbesondere im Zusammenhang mit größer werdenden Anlagenleistungen und Bauteilgewichten.

Bisher erfolgte vornehmlich eine entsprechend kosten-/materialintensive Überdimensionierung der betroffenen Komponenten, insbesondere basierend auf vergleichsweise großen Sicherheitsfaktoren. Bisher erfolgte auch eine Abstützung von besonders schweren oder wuchtigen Komponenten oder von besonders ausladenden Komponenten des Triebstrangs üblicherweise in Richtung des Maschinenträgers (Basis), insbesondere auch im Bereich eines hinter einer/der Getriebekomponente weiter entfernt vom Rotor angeordneten Generators (Drehmomentstützeinheit bzw. Gewichtskraftabstützung mit Kopplung zur Basis).

Die Veröffentlichung US 2016/061191 A1 beschreibt eine klauenartige Kupplung für Triebstränge von Windenergieanlagen an der Schnittstelle zwischen einer Planetenhohlradstirnseite und einem gegen eine Basis abgestützten Wellenflansch, wobei Vibrationsdämpfer an den Klauenflanken vorgesehen sind. Die EP 2 630 372 A1 zeigt eine Anordnung mit einer Rotorlagerung und einem an diese starr angekoppelten Getriebegehäuse. Die rotierenden Teile, nämlich die Rotorwelle und die Getriebeeingangswelle, sind über eine flexible Kupplung miteinander verbunden.

Davon ausgehend besteht ein Bedürfnis an optimierten Maßnahmen zur Drehmoment- bzw. Gewichtskraftabstützung von Triebstrangkomponenten, z.B. Getriebestufe und/oder Generator, insbesondere auch bei Triebsträngen für Windenergieanlagen.

### ZUSAMMENFASSUNG DER ERFINDUNG

Es ist die Aufgabe der vorliegenden Erfindung, Maßnahmen aufzuzeigen, die eine verbesserte Drehmoment- bzw. Gewichtskraftabstützung von vergleichsweise massiven schweren Triebstrangkomponenten ermöglichen, insbesondere von Getriebestufe und/oder Generator, insbesondere auch bei Triebsträngen für Windenergieanlagen.

Die Lösung der Aufgabe erfolgt durch eine Windenergieanlage mit einem Industriegetriebe mit den Merkmalen des Anspruchs 1, und durch ein Verfahren gemäß den Merkmalen des nebengeordneten Verfahrensanspruchs.

Bevorzugte Ausgestaltungen sind in den Unteransprüchen und in der nachfolgenden Beschreibung angegeben, die jeweils einzeln oder in Kombination miteinander einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Ein Aspekt der Erfindung betrifft eine Triebstranglagerung im Zusammenhang mit Triebsträngen, auf die ein dynamisches und vergleichsweise großes Moment wirkt, insbesondere auch ein Kippmoment. Bereitgestellt wird insofern eine Triebstranglagerungsanordnung für Industriegetriebe, insbesondere für einen doppelt gelagerten oder momentengelagerten Rotor einer Windenergieanlage, aufweisend: eine in einem ersten Gehäuse abgestützte/abstützbare Lagerung (insbesondere mit zwei axialversetzten Lagerstellen) für eine Welle des Triebstrangs und eine von einem zweiten Gehäuse umgebene und an die Welle gekuppelte/gekoppelte Getriebekomponente mit einer Planetengetriebestufe,

Erfindungsgemäß wird vorgeschlagen, eine Momentenabstützung vorzusehen, welche einem auf die Welle wirkenden schwerkraftbegründeten (Kipp-)Moment seitens der Getriebekomponente entgegenwirkt (insbesondere einem Moment oder einer Umlaufbiegung resultierend aus einer Getriebe-Generatorkombination); wobei die Momentenabstützung am (ersten) Gehäuse der Lagerung der Welle befestigt ist. Dies ermöglicht eine beträchtliche Reduzierung der auf den Triebstrang bzw. auf die drehfest miteinander verbundenen Komponenten (Welle, Getriebe, etwaige Kupplungen) ausgeübten statischen und dynamischen Belastungen. Beispielsweise bei einer Windkraftanlage mit doppelt gelagerter Rotorwelle bzw. so genannter Momentenlagerung und einem daran angebundenem Getriebe und Generator kann die Umlaufbiegung resultierend aus der Gewichtskraft der Getriebe-Generator-Kombination spürbar reduziert werden. Auch in konstruktiver Hinsicht ergeben sich Vorteile, insbesondere auch was die Steifigkeits- und Größenanforderungen eines/des Maschinenträgers betrifft.

Die Gewichtskraft des Getriebes und eines gegebenenfalls am Getriebegehäuse angeflanschten Generators belasten üblicherweise die Rotorwelle, die Rotorlager, die Getriebekomponenten (insbesondere auch einen Planetenträger einer ersten Getriebestufe sowie dessen Planetenträgerlager) und etwaige Flanschverbindungen zwischen Getriebe und Generator. In den rotierenden Elementen entsteht dabei eine so genannte Umlaufbiegung, welche in der Dimensionierung bzw. Auslegung der Gesamtkonstruktion berücksichtigt werden muss. Vor diesem Hintergrund ermöglicht die vorliegende Erfindung, die Umlaufbiegebeanspruchung deutlich zu reduzieren und zeitgleich auch eine Verkippung im Getriebe, insbesondere in einer/der ersten Planetenstufe, zu reduzieren. Dadurch kann auch ein besseres Tragverhalten der Verzahnungen des Getriebes erzielt werden. Die erfindungsgemäß erzielbare Verringerung der strukturellen Beanspruchungen kann insofern auch mit vermindertem Verschleiß einhergehen.

Die vorliegende Erfindung ermöglicht dabei auch einen optimierten Kraftrückfluss bei vergleichsweise geringen negativen Effekten aus unterschiedlichen Verformungen im/am Maschinenträger und im/am Getriebe, insbesondere dank sowohl Abstützung des Getriebedrehmoments als auch von Gewichtshebelkräften mittels der Momentenabstützung über das Rotorlagergehäuse. Beispielsweise bei Windenergieanlagen können die auf den Rotor und die Rotorwelle wirkenden Nickmomente aus Windlasten auch dann auf optimierte Weise abgefangen werden, wenn die Ausrichtung der Welle und etwaiger weiterer Komponenten des Triebstrangs durch einen z.B. leicht verkippenden Rotor zumindest leicht verändert wird; insbesondere müssen diese Nickmomente nicht mehr wie bisher über den Maschinenträger abgeleitet werden, so dass auch keine Zusatzlasten in der Tragstruktur aufzunehmen sind. Vielmehr ermöglicht die vorliegende Erfindung insofern auch eine zumindest kleine Bewegungstoleranz, je nach Art der Abstützung am ersten Gehäuse. Die vorliegende Erfindung kann bei unterschiedlichen Arten von Triebsträngen vorteilhaft implementiert sein/werden, insbesondere bei vergleichsweise großen Nickmomenten. Rein beispielhaft kann als weitere Anwendungsmöglichkeit ein Triebstrang mit Aufsteck-Planetengetrieben, insbesondere bei Rollenpressen genannt werden.

Bei bisherigen Getrieben erfolgte eine Abstützung üblicherweise nach unten in Richtung Basis/Maschinenträger. Bisher wurden auftretende Umlaufbiegemomente und Nickmomente oft auch basierend auf einer Überdimensionierung der betroffenen Maschinenelemente aufgefangen (insbesondere Rotorwelle, Rotorlager, Getriebestufe z.B. umfassend Planetenträger, Planetenträgerlager, sowie Getriebe- und Generatorgehäuseflansche). Bei dieser Vorgehensweise entsteht jedoch ein beträchtlicher Kosten- und Gewichtsnachteil, und beispielsweise bei Windenergieanlagen kann der Gewichtsnachteil sich auch sehr nachteilig auf weitere Anlagenkomponenten auswirken wie z.B. auch den Turm einer Windenergieanlage, welcher dann entsprechend tragfähiger ausgelegt sein muss. Um diesen Anforderungen besser gerecht zu werden, wurde bisher auch bereits eine Gewichtskraftabstützung zwischen Generator und Maschinenträger eingesetzt. Ein Nachteil hierbei ist jedoch, dass die Tragstruktur unterhalb des Generators hierfür üblicherweise nicht ausgelegt ist und bei einer schnellen Nickbewegung des Antriebsstrangs zusätzliche Lastüberhöhungen entstehen können; hierdurch werden nicht zuletzt auch Flanschverbindungen zwischen Getriebe und Generator zusätzlich belastet.

Hingegen gemäß der Erfindung wird die Erkenntnis genutzt, dass der Kraftfluss auch über das Rotorlagergehäuse aufgefangen und abgeleitet werden kann; dabei kann die Getriebestufe mit Generator wahlweise auch "fliegend" (insbesondere einseitig frei im Raum schwebend) angeordnet sein, in der Art eines freien Endes des Triebstrangs, welches eine gewisse Bewegungstoleranz erfährt, also z.B. einen vordefinierten Maximalbetrag einer Nickbewegung auch zusammen mit dem Rotor bzw. der Welle ausführen kann/könnte; hierdurch kann optional in mehreren Raumrichtungen ein beträchtlicher Bewegungsfreiheitsgrad sichergestellt werden, je nach Anwendung und gewünschter oder erforderlicher Steifigkeit des Triebstrangs; je nach gewünschter Steifigkeit kann dabei die Abstützung am Rotorlagergehäuse individuell auch bezüglich einzelner Bewegungsrichtungen ausgestaltet sein, beispielsweise hinsichtlich betragsmäßiger Bewegungstoleranz, hinsichtlich Vorspannung, Dämpfung (insbesondere mittels Elastomerlagerungen) oder dergleichen. Dabei kann auch eine schwingungstechnische Entkopplung erfolgen, insbesondere an der Schnittstelle zwischen erstem und zweitem Gehäuse. Nicht zuletzt auch im Zusammenhang mit z.B. bei Windenergieanlagen sehr dynamischen externen Einflüssen (Wind/Wetter, Rotorblattverstellung oder dergleichen Veränderungen des System-/Betriebszustandes) ermöglicht die Erfindung auch eine sehr nachhaltige und materialeffiziente Art und Weise der Lagerung, die sich auch für eine schlanke gewichtsoptimierte Art der Konstruktion eignet.

Dabei kann die Momentenabstützung über dem Rotorlagergehäuseumfang verteilt beispielsweise eine oder mehrere Abstützungen aufweisen, insbesondere an einzelnen Umfangsabschnitten. Die Art und Weise der im Einzelfall jeweils besonders vorteilhaften Abstützung kann der Fachmann dabei in Abhängigkeit der weiteren Komponenten des jeweiligen Triebstrangs insbesondere auch basierend auf der vorliegenden Offenbarung wählen.

Als "axial" ist im Folgenden insbesondere eine Ausrichtung gemäß der Erstreckung der Welle oder einer axial fluchtend daran gekuppelten weiteren Komponente des Triebstrangs zu verstehen, wobei eine "axiale" Ausrichtung je nach Neigung des Triebstrangs auch zumindest annähernd eine horizontale Ausrichtung sein kann, insbesondere in einer Erstreckung zwischen Rotor bzw. Nabe einerseits und Getriebekomponente oder Generator andererseits. Gemäß einer Ausgestaltung wird der hier beschriebene Triebstrang auf der einen Seite durch den Rotor begrenzt und auf der anderen Seite durch die Getriebekomponente oder einen/den (optional direkt ans Getriebe gekuppelten) Generator.

Sofern von "Rotorlagerung" gesprochen wird, kann hier synonym auch auf andere Wellenlagerungen Bezug genommen sein; der Begriff "Rotorlagerung" ist hier gewählt, um zu veranschaulichen, dass die Lagerung in demjenigen Abschnitt der Welle erfolgt, in welchem die von einem Rotor auf die Welle ausgeübten Kräfte und Momente abgestützt werden. Die Rotorlagerung ist beispielsweise bei Windenergieanlagen vergleichsweise robust und stark und voluminös dimensioniert, insbesondere da der Rotor einen Durchmesser von vielen Metern aufweisen kann (sogar über 100m oder gar 200m) und damit Ursache für sehr große Beanspruchungen/Momente sein kann.

Personifizierte Begriffe, soweit sie hier nicht im Neutrum formuliert sind, können im Rahmen der vorliegenden Offenbarung alle Geschlechter betreffen. Etwaige hier verwendete englischsprachige Ausdrücke oder Abkürzungen sind jeweils branchenübliche Fachausdrücke und sind dem Fachmann in englischer Sprache geläufig. Etwaige dazu synonym verwendete/verwendbare deutschsprachige Begriffe können hier der Vollständigkeit halber in (Klammern) angegeben werden, oder vice versa.

Sofern gemäß der vorliegenden Offenbarung auf eine vertikale Richtung oder eine Schwerkraftrichtung abgestellt wird, so ist diese in einem Winkel von (je nach Neigung der Welle oder eines/des Rotors) zumindest annähernd 90° zur axialen Richtung des Triebstrangs bzw. zu dessen bestimmungsgemäßer Einbaulage ausgerichtet (Mittellinien bzw. die Drehachse der jeweiligen Getriebekomponente bzw. der Leistungswelle in horizontaler Richtung oder leicht geneigt dazu).

Sofern gemäß der vorliegenden Offenbarung von einem Planetengetriebe gesprochen wird, so kann sowohl auf Planetengetriebestufen im Allgemeinen als auch auf Planetenstirnradgetriebe Bezug genommen sein.

Als Kippmoment ist gemäß der vorliegenden Offenbarung dabei ein Moment zu verstehen, welches sich aus der Getriebegewichtskraft und gegebenenfalls ergänzend auch aus der Generatorgewichtskraft multipliziert mit dem Hebelarm zum Auflage-/Drehpunkt am Planetenträgerlager bzw. an einer Schnittstelle zwischen Getriebe und Rotorwelle ergibt (sowie im Betrieb entsprechend ergänzend auftretende dynamische Lasten).

Es hat sich gezeigt, dass die vorliegende Erfindung insbesondere im Zusammenhang mit verbauten Planetengetrieben bzw. Planetengetriebestufen von Nutzen ist, insbesondere wenn auch ein Generator mit dem Getriebe einachsig bzw. fluchtend verbaut ist. Nichtsdestotrotz können die hier beschriebenen Vorteile auch für Triebstränge mit anderen oder zusätzlichen Getriebearten/-stufen realisiert werden.

Gemäß einem Ausführungsbeispiel generiert die wenigstens eine einstellbare Einheit an wenigstens einem Umfangspositionspaar, insbesondere bei 06 und 12Uhr und/oder bei 03 und 09Uhr, ein erstes im Wesentlichen axial ausgerichtetes Kräftepaar F1 um die axiale Mitte des Triebstrangs, insbesondere ein gegen Kipp- und/oder Gier-Momente gerichtetes Kräftepaar F1.

Gemäß einem Ausführungsbeispiel generiert die wenigstens eine einstellbare Einheit an wenigstens einem Umfangspositionspaar, insbesondere bei 03 und 09Uhr und/oder bei 06 und 12Uhr, ein zweites im Wesentlichen radial/tangential ausgerichtetes drehmomenterzeugendes Kräftepaar F2 orthogonal zur axialen Mitte des Triebstrangs wirkend, insbesondere ein gegen Drehmomente um die Welle gerichtetes Kräftepaar F2. Anders ausgedrückt: Die wenigstens eine einstellbare Einheit ist an wenigstens einem Umfangspositionspaar angeordnet zum Generieren eines Gegenmoments um die entsprechende Raumachse.

Gemäß einem Ausführungsbeispiel stellt die wenigstens eine einstellbare Einheit an wenigstens zwei gegenüberliegenden Umfangspositionen in wenigstens einem Kupplungsabschnitt zwischen interagierenden Kupplungsteilen eine Schwingungsdämpfung oder Schwingungsentkopplung sicher, insbesondere mittels wenigstens einer Vorspanneinheit je Umfangsposition.

Gemäß einem Ausführungsbeispiel ist die wenigstens eine einstellbare Einheit an wenigstens zwei gegenüberliegenden vordefinierten Umfangspositionen, insbesondere zumindest an den Umfangspositionen 06 und 12Uhr und/oder bei 03 und 09Uhr, federnd und/oder dämpfend zwischen Zugankern oder Zug-/Druckankern jeweils des Getriebegehäuses und des Rotorlagergehäuses wirkend verbaut. Die jeweiligen gegenüberliegenden Umfangspositionen können dabei auch in Abhängigkeit von vorrangig herrschenden Belastungszuständen ausgewählt und z.B. in Anzahl und Größe skaliert werden.

Gemäß einem Ausführungsbeispiel umfasst die Triebstranglagerungsanordnung eine Mehrzahl von einstellbaren Einheiten, mittels welchen Reaktionskräftepaare um alle drei Momentenachsen bzw. dreidimensional wirkend um alle drei Raumrichtungen bereitgestellt sind und wahlweise auch aktiv eingestellt werden. Dies liefert auch eine besonders effektive Dämpfung.

Gemäß einem Ausführungsbeispiel ist die Momentenabstützung unabhängig von irgendeiner Verbindung zu einem unterhalb des Triebstrangs oder unterhalb der Triebstranglagerungsanordnung angeordneten Maschinenträger oder dergleichen Basis ausschließlich am ersten Gehäuse bzw. am Gehäuse der Lagerung der Welle abgestützt. Dies ermöglicht auch eine Bewegungstoleranz ohne dass der Maschinenträger über eine vergleichsweise große axiale Länge und/oder in vergleichsweise robuster Ausgestaltung vorgesehen sein muss.

Gemäß einem Ausführungsbeispiel ist die Momentenabstützung in entlang eines äußeren Anschlussdurchmessers zwischen erstem und zweitem Gehäuse angeordneten Abstützpunkten/- bereichen am (ersten) Gehäuse der Lagerung der Welle abgestützt, insbesondere in wenigstens vier Umfangsabschnitten oder vollumfänglich am ersten Gehäuse, insbesondere bei rotationssymmetrischer Verteilung der Abstützpunkte/-bereiche über den gesamten Umfang. Dies ermöglicht nicht zuletzt auch eine Optimierung der Weiterleitung von Kräften und Momenten weitgehend unabhängig von deren Wirkungsrichtung.

Gemäß einem Ausführungsbeispiel stellen das erste und/oder das zweite Gehäuse zumindest teilweise wenigstens einen Kupplungspartner (Klaue, Nocke, Zapfen, Steg, oder dergleichen Fortsatz insbesondere auch in radialer und/oder in tangentialer Richtung bzw. in Umfangsrichtung) zur gegenseitigen Abstützung der Gehäuse aneinander bereit, insbesondere in einstückig integraler Ausgestaltung an einer Außenmantelfläche des jeweiligen Gehäuses. Dies liefert nicht zuletzt auch gute Robustheit. Bei Gleichverteilung der Kupplungspartner(-elemente) in Umfangsrichtung kann dabei auch eine Abstützung weitgehend unabhängig von einer momentanen Kraft-/Momentenwirkungsrichtung sichergestellt werden.

Die Momentenabstützung weist wenigstens eine einstellbare Einheit auf, insbesondere eine hinsichtlich Kraft (Betrag) und/oder Wirkungsrichtung und/oder Kraftangriffspunkt/-bereich einstellbare Einheit. Dies begünstigt nicht zuletzt auch eine Individualisierung der Art und Weise der Abstützung, beispielsweise auch hinsichtlich einer betriebszustandsabhängigen Regelung.

Die einstellbare Einheit kann z.B. hinsichtlich einer Vorspannkraft (insbesondere Federkraft oder hydraulische Kraft) einstellbar sein, und/oder hinsichtlich einer aktiven Regelungskraft (Gegenkraft) in Reaktion auf sensorisch erfasste momentane Kräfte und Momente. Entsprechende Sensorik ist beispielsweise im Bereich der jeweiligen Schnittstelle an stirnseitigen und/oder radialen Kontaktflächen vorgesehen. Insofern liefert die vorliegende Erfindung auch ein Konzept zur aktiven Kraftaufbringung insbesondere in Reaktion auf momentan auf den Triebstrang wirkende Kräfte/Momente, z.B. in Abhängigkeit von momentan herrschenden Wind-/Wetterbedingungen bei Offshore-Windenergieanlagen.

Gemäß einem Ausführungsbeispiel ist die Momentenabstützung, insbesondere eine/die wenigstens eine einstellbare Einheit der Momentenabstützung, in einem oberen Bereich und/oder in einem unteren Bereich einer Schnittstelle zwischen den Gehäusen vorgesehen. Eine derartige Anordnung liefert auch den Vorteil, dass eine Aufricht- und/oder Abstützkraft jeweils an spezifischen Umfangsabschnitten gezielt aufgebracht werden kann. Hinsichtlich der hier beschriebenen Aufrichtkraft ist aufgrund des damit verbundenen vorteilhaften Hebelarms ein Kraftangriffspunkt unten und oben am entsprechenden Anschlussdurchmesser am Gehäuse oder noch weiter radial außenliegend an speziell dafür vorgesehenen Laschen oder Zapfen oder dergleichen Hebelelementen vorgesehen.

Beispielsweise erfolgt die Kraftübertragung hinsichtlich der gewünschten Aufrichtkraft (im Wesentlichen horizontal) in einem Umfangswinkelbereich von wenigstens zweimal mindestens 30° und/oder in Kombination mit einer gegebenenfalls gewünschten bzw. möglicherweise nur sehr lokal intendierten Abstützkraft (im Wesentlichen vertikal) in einem Umfangswinkelbereich von wenigstens viermal 20°. Je nach Anzahl und Ausgestaltung der kraftübertragenden Abschnitte kann jedoch auch bereits ein kürzeres bzw. schmaleres Element ausreichen, z.B. in einem Umfangssegment über einen Winkel von nur 10°.

Gemäß einem Ausführungsbeispiel ist die Momentenabstützung, insbesondere die wenigstens eine einstellbare Einheit, diagonal verschaltet, insbesondere derart dass ein hydraulischer oder mechanischer Ausgleich in axialer Richtung relativ weich(er) und in Kipp-Richtung relativ steif(er) ist. Dies begünstigt nicht zuletzt auch einen guten Kompromiss aus effektiver Abstützung und potentiell gewünschtem Lagetoleranzausgleich insbesondere im Zusammenhang mit Fertigungstoleranzen, Rotorlagerspiel oder Rotorlagernachgiebigkeit in axialer Richtung.

Die wenigstens eine einstellbare Einheit oder wenigstens ein einstellbares Element davon kann derart diagonal verschaltet sein, dass ein hydraulischer oder mechanischer Ausgleich in axialer Richtung der Rotationsachse relativ weich(er) und in Kipp-Richtung relativ steif(er) ist, insbesondere derart dass in Kipprichtung ein hydraulischer oder mechanischer Ausgleich richtungsabhängig weich(er) oder steif(er) bzw. mit höherer oder niedriger Schwingungsdämpfung ausgeführt ist. Dies liefert auch ein vorteilhaftes Betriebsverhalten.

Die Momentenabstützung kann insbesondere in einem Umfangswinkelbereich von wenigstens zweimal mindestens 30° und/oder in einem Umfangswinkelbereich von wenigstens viermal 20° derart hydraulisch und/oder mechanisch abgestützt sein, dass ein hydraulischer oder mechanischer Ausgleich in axialer Richtung der Rotationsachse relativ weich(er) und in Umfangsrichtung relativ steif(er) ist, insbesondere derart dass in Umfangsrichtung ein hydraulischer oder mechanischer Ausgleich richtungsabhängig weich(er) oder steif(er) bzw. mit höherer oder niedriger Schwingungsdämpfung ausgeführt ist.

Die vorliegende Erfindung ermöglicht mehrere miteinander kombinierbare Maßnahmen nicht nur betreffend eine Kippmomentabstützung, sondern auch eine Drehmomentabstützung. Letztere wirkt in Umfangsrichtung und kann leistungsabhängig erforderlich werden oder leistungsabhängig eingestellt/geregelt werden. Die Kippmomentabstützung wirkt der Gewichtskraft in Kipprichtung entgegen, kann also auch als Gegenkraft bzw. Rückstellkraft mit vertikaler Kraftkomponente beschrieben werden.

Gemäß einem Ausführungsbeispiel ist am (zweiten) Gehäuse der Getriebekomponente ein radial vorstehender Flansch oder dergleichen Kraftangriffskranz oder -segment vorgesehen, welcher/s von der Momentenabstützung, insbesondere von der wenigstens einen einstellbaren Einheit, an wenigstens einer Axialposition (insbesondere beidseitig axial gegenüberliegend) begrenzt oder umgriffen ist, beispielsweise ringartig umgrenzt in der Art einer im Schnitt C-förmigen Ringschale oder mehrerer (Halb-)Schalenelemente. Hierdurch kann auch eine sehr robuste Anordnung mit gewisser Winkeltoleranz und beispielsweise integrierter Dämpfungsfunktion auf vorteilhafte Weise bereitgestellt werden.

Der jeweilige Kraftangriffspunkt/-bereich kann beispielsweise auch integral an der jeweiligen Gehäusekomponente vorgesehen sein, beispielsweise bei Gussgehäusen angegossen sein, also bereits im Rahmen der Konstruktion und Auslegung mit berücksichtigt werden. Wahlweise kann alternativ (z.B. falls kein Gussgehäuse zum Einsatz kommt) oder zusätzlich eine reversible form-/kraftschlüssige Verbindungsart vorgesehen sein, beispielsweise eine Verschraubung. Dies ist beispielsweise im Zusammenhang mit einer Umrüst- oder Nachrüstoption in Bestandsgetrieben bzw. an bereits verbauten Triebsträngen von Nutzen, wobei auch eine stoffschlüssige Befestigung vorgenommen werden kann.

Gemäß einem Ausführungsbeispiel ist die Momentenabstützung derart angeordnet, dass eine im Wesentlichen axial und entgegen dem Kippmoment wirkende Aufrichtkraft am zweiten Gehäuse angreifend bereitgestellt ist/wird, insbesondere in einem radial maximal weit außenliegenden Kraftangriffsbereich am Gehäuse der Getriebekomponente. Die Aufrichtkraft wird beispielsweise durch ein Kräftepaar an gegenüberliegenden Kraftangriffsbereichen radial möglichst weit außen bereitgestellt, so dass auch kleine Bewegungstoleranzen auf möglichst exakte Weise und bei gutem Hebelarm und wahlweise auch gedämpft ausgeglichen werden können. Dabei ist "axial" hier auch im Sinne der axialen Erstreckung des Triebstrangs zu verstehen.

Gemäß einem Ausführungsbeispiel umfasst die Momentenabstützung eine auf das (erste) Gehäuse der Lagerung der Welle wirkende (weitere) Abstützeinheit, welche derart angeordnet ist, dass eine im Wesentlichen vertikal (radial/tangential) bzw. in Umfangsrichtung wirkende Kraft am zweiten Gehäuse angreifend bereitgestellt ist/wird. Dies ermöglicht nicht zuletzt auch eine noch weitergehende funktionale Integration in die Momentenabstützung insbesondere bezüglich um die Welle oder den Triebstrang wirkender Drehmomente und hinsichtlich einer diesbezüglich möglicherweise gewünschten Lagetoleranz oder auch Abdämpfung.

Insofern liefert die vorliegende Erfindung auch eine Momentenabstützung in einer Radialebene in tangentialer Richtung bzw. in Umfangsrichtung (Drehmomentstützte in der Art einer inneren Stütze) und Kippabstützung aus der Radialebene heraus (in der Art einer äußeren Stütze), jeweils durch Abstützung am massiven Rotorlagergehäuse, wobei der untenliegende Maschinenträger weniger massiv bzw. schlanker ausgeführt werden kann. Die Kraftkompensation kann dabei beispielsweise auf hydraulische Weise erfolgen.

Gemäß einem Ausführungsbeispiel ist das zweite Gehäuse separat und axial beabstandet vom ersten Gehäuse angeordnet. Die Gehäuse sind direkt beispielsweise ausschließlich mittels der hier beschriebenen Momentenabstützung miteinander verbunden, und lediglich indirekt mittelbar auch über die jeweiligen Lagerungen und Wellen, die im jeweiligen Gehäuse vorgesehen sind.

Gemäß einem Ausführungsbeispiel ist die Getriebekomponente zwischen der Welle und einem Generator angeordnet, welcher am zweiten Gehäuse oder an der Getriebekomponente angreift (bzw. dessen Gewichtskraft). Diese Art der Reihenschaltung im Triebstrang hat sich für unterschiedliche Anwendungen als vorteilhaft erwiesen, und erfindungsgemäß ist die Abstützung auch bei zusätzlich angeflanschtem Generator auf vorteilhafte Weise realisierbar, insbesondere ausschließlich durch Abstützung am ersten Gehäuse, also ohne weitere Abstützungen in Richtung Maschinenträger. Dies ermöglicht nicht zuletzt auch bei in Reihe angeordnetem Generator einen vergleichsweise kurzen/schlanken Maschinenträger und damit auch eine vorteilhafte Kraftverteilung/Konzentration auf die Schnittstelle zum Lagergehäuse.

Ein Aspekt der Erfindung betrifft ferner ein Industriegetriebe mit einer solchen Triebstranglagerungsanordnung, insbesondere in einer Anordnung in einer Windenergieanlage.

Die zuvor genannte Aufgabe wird insofern auch gelöst durch ein Industriegetriebe, insbesondere mit Planetengetriebestufe, mit einer zuvor weiter oben beschriebenen Triebstranglagerungsanordnung. Die zuvor genannte Aufgabe wird insofern auch gelöst durch Windenergieanlage mit einem zuvor weiter oben beschriebenen Industriegetriebe bzw. mit einer solchen Triebstranglagerungsanordnung. Hierdurch ergeben sich zuvor genannte Vorteile, insbesondere in Hinblick auf eine Funktionsweise des jeweiligen Getriebes bei deutlich reduzierten von extern wirkenden Belastungen und deutlich reduziertem Verschleiß.

Ein Aspekt der Erfindung betrifft ferner ein Verfahren zum Einstellen oder Anpassen einer Lagerung einer derartigen Triebstranglagerungsanordnung. Die zuvor genannte Aufgabe wird insofern auch gelöst durch ein Verfahren gemäß dem entsprechenden nebengeordneten Verfahrensanspruch, nämlich durch ein Verfahren zum Einstellen einer Lagerung einer Triebstranglagerungsanordnung eines Industriegetriebes, insbesondere bei einem Triebstrang mit doppelt gelagertem oder momentengelagertem Rotor einer Windenergieanlage, wobei eine in einem ersten Gehäuse abgestützte Lagerung einer Welle des Triebstrangs und eine von einem zweiten Gehäuse umgebene und an die Welle gekoppelte Getriebekomponente (insbesondere Planetengetriebestufe) gegeneinander gelagert sind/werden, wobei mittels einer Momentenabstützung, welche einem auf die Welle wirkenden schwerkraftbegründeten Moment seitens der Getriebekomponente entgegenwirkt, eine Abstützung des zweiten Gehäuses und damit der Getriebekomponente am ersten Gehäuse, also am Gehäuse der Lagerung der Welle erfolgt, insbesondere bei einem Triebstrang mit am zweiten Gehäuse und demnach auch am ersten Gehäuse abgestützten Generator, insbesondere in einer zuvor weiter oben beschriebenen Triebstranglagerungsanordnung oder in einem Industriegetriebe oder in einer Windenergieanlage. Dies ermöglicht im Zusammenhang mit den zuvor genannten Vorteilen auch eine nachhaltigere Betriebsweise von dynamisch hochbelasteten Anlagen und Industriegetrieben, beispielsweise bei Windenergieanlagen.

Dabei erfolgt mittels wenigstens einer zwischen dem ersten und zweiten Gehäuse wirkenden einstellbaren Einheit eine aktive kraft- und/oder weggesteuerte Regelung einer auf das zweite Gehäuse ausgeübten und über das erste Gehäuse abgeleiteten Aufrichtkraft oder Abstützkraft, beispielsweise über eine hydraulische Aktuation, insbesondere basierend auf momentanen Messwerten wenigstens eines im Triebstrang verbauten Kraft-/Weg-Sensors und/oder Beschleunigungssensors. Dies begünstigt nicht zuletzt auch eine nachhaltige Betriebsweise durch Anpassung der Art und Weise der Abstützung auf momentane Betriebsbedingungen.

Gemäß einem Ausführungsbeispiel erfolgt mittels der wenigstens einen einstellbaren Einheit an wenigstens zwei gegenüberliegenden Umfangspositionen in wenigstens einem Kupplungsabschnitt zwischen interagierenden Kupplungsteilen eine Schwingungsdämpfung oder Schwingungsentkopplung, insbesondere mittels wenigstens einer Vorspanneinheit je Umfangsposition. Dabei können je nach Anwendungsfall eine Mehrzahl von einstellbaren Einheiten implementiert sein, mittels welchen Reaktionskräftepaare um wenigstens zwei oder um alle drei Momentenachsen bzw. dreidimensional wirkend um alle drei Raumrichtungen bereitgestellt sind und wahlweise auch aktiv eingestellt werden können.

Die zuvor genannte Aufgabe wird auch gelöst durch Verwendung einer zuvor weiter oben beschriebenen Triebstranglagerungsanordnung in einem Industriegetriebe, insbesondere in einer Windenergieanlage in einer Anordnung zwischen einem/dem Rotor der Windenergieanlage und einem/dem Generator der Windenergieanlage, insbesondere in einachsig fluchtender Anordnung/Ausrichtung, wobei mittels einer/der Momentenabstützung der Triebstranglagerungsanordnung sowohl Kippmomente als auch Drehmomente von einem/dem Getriebegehäuse der Triebstranglagerungsanordnung auf ein/das auf einer Welle des Triebstrangs angeordneten Rotorlagergehäuse übertragen werden, wobei das Getriebegehäuse und etwaige weitere daran angeflanschte/gekuppelte Komponenten wie z.B. ein Generator ausschließlich am Rotorlagergehäuse abgestützt ist/sind. Hierdurch lassen sich zuvor weiter oben genannte Vorteile realisieren.

### KURZE BESCHREIBUNG DER FIGUREN

In den nachfolgenden Zeichnungsfiguren wird die Erfindung noch näher anhand bevorzugter Ausführungsbeispiele exemplarisch beschrieben, wobei die nachfolgend dargestellten Merkmale sowohl jeweils einzeln als auch in Kombination einen Aspekt der Erfindung darstellen können, und wobei für Bezugszeichen, die nicht explizit in einer jeweiligen Zeichnungsfigur beschrieben werden, auf die anderen Zeichnungsfiguren verwiesen wird. Es zeigen jeweils in schematischer Darstellung:
**Figuren 1A, 1B** in einer Seitenansicht und in einer teilweise geschnittenen Seitenansicht einen Triebstrang mit einer Abstützung des Triebstrangs gemäß dem Stand der Technik;
**Figur 2** in einer teilweise geschnittenen Seitenansicht eine Triebstranglagerungsanordnung gemäß einem ersten Ausführungsbeispiel insbesondere für einen Rotor einer Windenergieanlage;
**Figur 3** in einer teilweise geschnittenen Seitenansicht eine Triebstranglagerungsanordnung gemäß einem weiteren Ausführungsbeispiel insbesondere für einen Rotor einer Windenergieanlage;
**Figuren 4A****,** **4B** in einer Seitenansicht und in einer geschnittenen Frontansicht eine Triebstranglagerungsanordnung gemäß einem weiteren Ausführungsbeispiel insbesondere für einen Rotor einer Windenergieanlage;
**Figuren 5A****,** **5B** in einer Seitenansicht und in einer geschnittenen Frontansicht eine Triebstranglagerungsanordnung gemäß einem weiteren Ausführungsbeispiel insbesondere für einen Rotor einer Windenergieanlage;

### DETAILLIERTE BESCHREIBUNG DER FIGUREN

Die Erfindung wird zunächst unter allgemeiner Bezugnahme auf alle Bezugsziffern und Figuren erläutert. Besonderheiten oder Einzelaspekte oder in der jeweiligen Figur gut sichtbare/darstellbare Aspekte der vorliegenden Erfindung werden individuell im Zusammenhang mit der jeweiligen Figur thematisiert.

Ein Triebstrang weist beispielsweise die folgenden Komponenten auf: Nabe 1, Welle 2 (insbesondere Rotorwelle einer Windenergieanlage), Rotorlagergehäuse 3, Rotorlager/Rotorlagerung 4 (insbesondere Momentenlagerung bzw. Kegelrollenlagerung), Kupplung 5, Getriebe 6 in Getriebegehäuse 7, Drehmomentstützeinheit bzw. Gewichtskraftabstützung 8 mit Kopplung zur Basis (Maschinenträger), sowie einen Generator 9. Bei starken auch dynamischen Kräften, beispielsweise auch erzeugt Biegemomente ausgehend von einem an die Welle gekuppelten Rotor einer Windenergieanlage, wird die Struktur des Triebstrangs im Zusammenhang mit hohen Gewichtskräften stark belastet, auch dann, wenn die Drehmomentstützeinheit bzw. Gewichtskraftabstützung 8 vergleichsweise gut ausgelegt/dimensioniert ist. Neben der Rotorwelle, der Flanschanbindung zum Planetenträger, den Planetenträgerlagern und der Drehmomentstütze ist auch der Maschinenträger dabei durchaus hohen Belastungen ausgesetzt. In diesem Kontext ist es von Interesse, eine vorteilhafte Art der Lagerung des Triebstrangs zu schaffen, welche derartige Belastungen gut aufnehmen und weiterleiten kann.

Bereitgestellt wird eine Triebstranglagerungsanordnung 10 beispielsweise für Industriegetriebe 20, mit einer Welle 2, welche in einer Rotorlagerung 14 abgestützt ist (hier: doppelt gelagert bzw. Momentenlagerung). Die Rotorlagerung 14 ist von einem Rotorlagergehäuse 13 (erstes Gehäuse) eingehaust bzw. umgeben. Eine Getriebekomponente 16 insbesondere mit Planetengetriebestufe ist in einem Getriebegehäuse 17 (zweites Gehäuse) angeordnet, und die Welle 2 interagiert mit dieser Getriebekomponente 16. Eine Momentenabstützung 18 (Drehmoment- und/oder Kippmomentabstützung) ist als eine Art mechanische/hydraulische Brücke zwischen den beiden Gehäusen 13, 17 vorgesehen, insbesondere an einem möglichst weit radial außen liegenden Anschluss(durchmesser), wobei eine Abstützung am ersten Gehäuse 13 beispielsweise in den dargestellten Punkten P1, P2 erfolgt. Die Abstützung im Bereich P1 kann vorteilhafterweise auch symmetrisch aber außermittig erfolgen, insbesondere um eine Abstütz- und/oder Dämpffunktion auch in Gierrichtung (senkrecht zur Kipp- und Achsrichtung, Drehbewegung um die Turmachse) sicherzustellen.

Für die Abstützung am ersten Gehäuse 13 sind insbesondere die folgenden Komponenten vorgesehen: Zuganker 13.5, Zapfen/Nocke 13.7

Für die Abstützung am zweiten Gehäuse 17 (bzw. Kraftübertragung vom zweiten Gehäuse) sind insbesondere die folgenden Komponenten vorgesehen:
radial vorstehender Flansch 17.1 oder dergleichen Kraftangriffskranz oder -segment oder Zapfen, einzelnes Kraftangriffssegment 17.3 (insbesondere Nase oder Lasche oder Steg), Zuganker 17.5, Zapfen/Nocke 17.7.

Die Momentenabstützung 18 ermöglicht die Kraftaufnahme und -weiterleitung vom Getriebegehäuse 17 über das Lagergehäuse 13 in eine/die Basis 101. Dabei wird eine entgegen der Gewichts- /Gravitationskraft g auf das Getriebegehäuse 17 wirkende Aufrichtkraft F1 bereitgestellt (insbesondere als Kräftepaar um die Mittenlängsachse bzw. Wellenachse), in der Art eines gegen ein/das Kippmoment **M1** wirkenden rückstellenden Abstützmoments **M2.** Optional kann die Momentenabstützung 18 zusätzlich auch eine Abstützkraft **F2** bewirken bzw. bereitstellen bzw. aktiv generieren, mittels welcher einem/dem an der Getriebekomponente wirkenden und auf das Getriebegehäuse übertragenen Drehmoment **M3** entgegengewirkt werden kann. Die Aufrichtkraft **F1** und die Abstützkraft **F2** können wahlweise auch aktiv geregelt werden, beispielsweise basierend auf momentanen Messwerten von Kraft-/Wegsensoren an der jeweiligen Schnittstelle.

Die Momentenabstützung 18 weist bevorzugt wenigstens eine einstellbare Einheit 18.1 auf, insbesondere umfassend: Vorspanneinheit 18.2 (insbesondere axial, insbesondere mit wenigstens einer mechanischen Feder), Abstützeinheit 18.3 (insbesondere ring- oder halb-/schalenförmig), Diagonalverschaltung 18.5, weitere Abstützeinheit 18.6 (insbesondere ring- oder halb-/schalenförmig), weitere Vorspanneinheit 18.7 bzw. wenigstens ein entsprechend verbautes Entkopplungselement (insbesondere in Radialebene angeordnet und/oder in Umfangsrichtung ausgerichtet);

Wahlweise kann die Art und Weise der Abstützung aktiv eingestellt und auch geregelt werden. Dazu kann optional wenigstens ein Kraft-/Weg-Sensor 19 vorgesehen sein, welcher mit einer Steuerungs- /Regelungseinheit verbunden sein kann.

Die hier beschriebene Triebstranglagerungsanordnung 10 liefert insbesondere auch bei einer Windenergieanlage 100 die hier beschriebenen Vorteile in besonders spürbarer Weise, wobei ein Maschinenträger oder dergleichen Basis 101 für den Triebstrang auf einem Turm 102 angeordnet ist.

Im Folgenden wird die Erfindung noch spezifischer unter Bezugnahme auf die einzelnen Figuren erläutert.

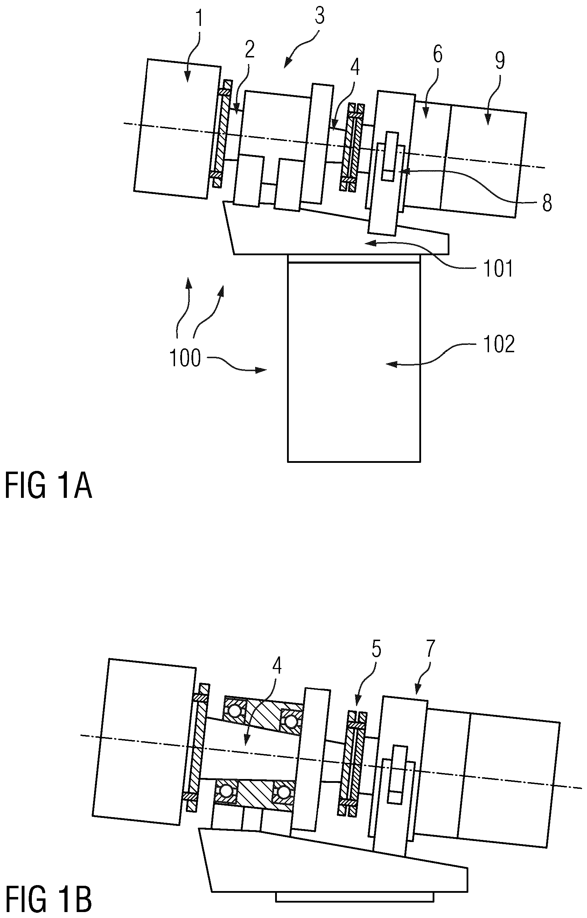

In den **Fig. 1** ist eine vorbekannte Triebstranganordnung unter Bezugnahme auf eine Windenergieanlage dargestellt. Am Getriebegehäuse 7 ist ein Generator 9 befestigt. Das Getriebegehäuse ist über eine Stützeinheit 8 (Drehmoment- und Gewichtskraftabstützung) nach unten am Maschinenträger 101 abgestützt. In **Fig. 1A** ist das Rotorlagergehäuse 3 in einer Seitenansicht gezeigt, und in **Fig. 1B** ist das Rotorlagergehäuse 3 in einer geschnittenen Seitenansicht gezeigt. Die Rotorwelle 2 ist vergleichsweise wuchtig bzw. durchmesserstark und das Rotorlager 4 ist vergleichsweise robust über einen recht großen Längenabschnitt am Maschinenträger 101 abgestützt.

Die Gewichtskraft des Getriebes und gegebenenfalls eines am Getriebegehäuse angeflanschten Generators belasten dabei die Rotorwelle, die Rotorlager, den Planetenträger insbesondere einer/der ersten Getriebestufe, dessen Planetenträgerlager und die Flanschverbindungen zwischen Rotorwelle und Getriebe. In den rotierenden Elementen entsteht dadurch eine Umlaufbiegung, welche in der Dimensionierung nachteiliger Weise berücksichtigt werden muss.

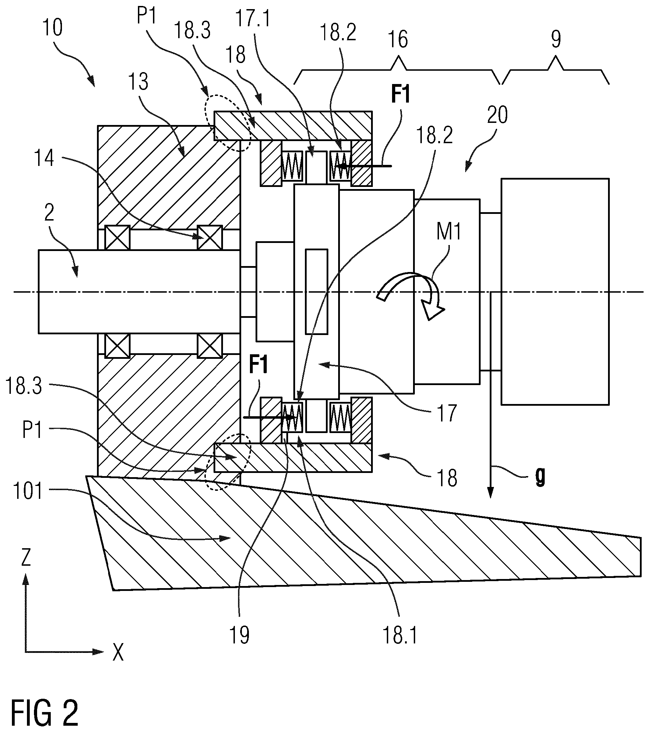

In **Fig. 2** ist ein erstes Ausführungsbeispiel der Triebstranglagerungsanordnung 10 gezeigt. Das am Flansch 17.1 oder entsprechenden radialen Fortsätzen generierte Kräftepaar **F1** bewirkt eine Aufrichtkraft gegen ein Nick-/Kippmoment **M1.** Über die einstellbare Einheit 18.1 kann wahlweise eine vordefinierte Art der Abstützung bzw. Kraftentfaltung oder auch eine aktive Regelung implementiert sein, beispielsweise auch basierend auf momentanen Messwerten wenigstens eines Kraft-/Wegsensors 19 und/oder eines Beschleunigungssensors 21. Die Kraftweiterleitung und Abstützung am Rotorlagergehäuse 13 kann insbesondere in den Bereichen bzw. Punkten P1 erfolgen. Diese Abstützung kann vorteilhafterweise auch symmetrisch aber außermittig erfolgen, insbesondere um eine Abstütz- und/oder Dämpffunktion auch in Gierrichtung (senkrecht zur Kipp- und Achsrichtung, Drehbewegung um die Turmachse) sicherzustellen, insbesondere bei intermediärer Zwischenschaltung wenigstens einer einstellbaren Einheit 18.1 umfassend wenigstens eine Vorspanneinheit 18.2 in wenigstens einem Kupplungsabschnitt zwischen interagierenden Kupplungsteilen 17.1, 18.3. In Verbindung mit Daten aus wenigstens einem Sensor (insbesondere Daten aus Beschleunigungsaufnehmer 21) kann eine aktive Dämpfung bei Schwingungen z.B. um die Nick- oder Gierachse erzeugt werden und/oder durch elastische Elemente passiv gedämpft werden.

Beispielsweise für eine Windkraftanlage mit doppelt gelagerter Rotorwelle bzw. Momentenlagerung und einem daran angebundenem Getriebe und Generator kann die Umlaufbiegung resultierend aus der Gewichtskraft der Getriebe-Generatorkombination mittels der erfindungsgemäßen Anordnung deutlich reduziert werden. Erfindungsgemäß kann die Umlaufbiegebeanspruchung deutlich reduziert werden und zugleich auch eine Verkippung im Getriebe, insbesondere in einer/der ersten Planetenstufe, reduziert werden; dadurch kann nicht zuletzt auch ein besseres Tragverhalten der Verzahnungen erzielt werden. Darüber hinaus kann durch die Abstützung des Getriebedrehmoments über das Rotorlagergehäuse und auch durch eine Drehmomentstütze des Getriebes ein verbesserter Kraftrückfluss mit geringeren negativen Effekten aus einer üblicherweise unterschiedlichen Verformung zwischen Maschinenträger und Triebstrang (Getriebe und dessen Anbindung an die Rotorwelleneinheit) erzielt werden. Die Nickmomente insbesondere aus Windlasten (bei Windenergieanlagen) müssen insofern nicht über den Maschinenträger abgestützt werden und führen dadurch auch nicht zu Zusatzlasten. Auch insofern erübrigt sich dank der erfindungsgemäßen Lagerungs-/Abstützart nun auch eine Überdimensionierung der betroffenen Maschinenelemente (Rotorwelle, Rotorlager, Rotorwellenflansch zum Planetenträger, Planetenträger, Planetenträgerlager, Getriebe- und Generatorgehäuseflansche), wodurch auch ein Kosten- und Gewichtsvorteil generiert werden kann. Auch eine zusätzliche Gewichtskraftabstützung zwischen Generator und Maschinenträger ist insofern nicht mehr erforderlich; eine Tragstruktur zur Gewichtslastabstützung unterhalb des Generators wird entbehrlich; eine Nickbewegung des Antriebsstrangs kann nun über das Lagergehäuse abgefangen bzw. abgedämpft werden, ohne ungünstige Hebelkräfte oder Lastüberhöhungen, die sich auf die Gesamtstruktur auswirken könnten.

Durch eine einstellbare Einheit bzw. durch wenigstens ein einstellbares Element, die/das vorzugsweise zumindest im oberen Bereich und/oder unteren Bereich der Schnittstelle zwischen Getriebe- und Rotorlagergehäuse angeordnet ist/sind, kann auch das durch die Getriebemasse und gegebenenfalls Generatormasse induzierte Biegemoment am Getriebegehäuse (Drehmomentstütze) vorzugsweise gegenüber dem Rotorlagergehäuse abgestützt werden. Die einstellbare Einheit kompensiert damit die negative Wirkung des Biegemomentes auf die davon betroffenen Maschinenelemente und richtet zugleich die entsprechenden Getriebekomponente aus, z.B. ein Hohlrad einer ersten Planetenstufe gegenüber dem Planetenträger, und kann dabei auch ein besseres Tragverhalten in den Verzahnungen sicherstellen.

Erfindungsgemäß kann ein Kraftschluss zwischen den nicht rotierenden Gehäuseteilen des Getriebes und des Rotorlagergehäuses hergestellt werden. Das aus der Gewichtskraft entstehende Gewichts-Biegemoment wird durch eine Aufrichtkraft kompensiert, insbesondere durch eine Aufrichtkraft in Form eines Kräftepaars, das oben und unten am Getriebegehäuse angreift.

In einer weiteren Funktion kann eine nahezu lastfreie Axialbewegung entlang der Rotorwellenachse dadurch erzeugt bzw. zugelassen werden, dass die einstellbare Einheit bzw. das wenigstens eine einstellbare Elemente davon diagonal verschaltet wird/werden, so dass das Gewichts-Biegemoment weiterhin durch ein gleich großes Kräftepaar aufgenommen wird, ohne dass die Axialbewegung behindert wird. Als Diagonalverschaltung kann dabei im vorliegenden Kontext insbesondere im Zusammenhang mit einem hydraulischen und/oder mechanischen (Kraft- bzw. Positions-)Ausgleich auch eine vergleichsweise weiche Abstützung in axialer Richtung (je nach Neigung der Welle zumindest annähernd in der Horizontalebene) und eine vergleichsweise steife Abstützung in vertikaler Richtung bzw. in Kipp-Richtung bezeichnet werden. Als Kipp-Richtung ist dabei eine insbesondere durch die Gravitationskraft begründete Bewegungsrichtung des Getriebes relativ zur Welle bzw. relativ zum Rotorlagergehäuse zu verstehen; das Kippen muss nicht notwendigerweise um eine Achse orthogonal zur Welle erfolgen, sondern kann je nach dynamischem Zustand auch eine mehrachsige Kipp-/Gierbewegung sein.

Die mittels der erfindungsgemäße Anordnung realisierbare Entlastung hinsichtlich der Gewichtskraft und damit des Umlaufbiegemoments für die rotierenden Teile wird dabei bevorzugt in denjenigen Bereichen des Triebstranges beispielsweise einer Windenergieanlage durchgeführt, die ohnehin in der Lage sind oder dafür vorgesehen sind, hohe Lasten und Biegemomente, beispielsweise resultierend aus Windlasten, aufzunehmen. Eine etwaige zusätzliche Ertüchtigung bzw. Verstärkung zum Sicherstellen der gewünschten Gewichts-Biegemoment-Entlastung ist daher mit vergleichsweise geringem Aufwand und allenfalls keinen Nachteilen verbunden, welche gegebenenfalls aus einem unterschiedlichen Verformungsverhalten zwischen Triebstrang und Maschinenträger resultieren; derartige Umstände sind jedoch bei der erfindungsgemäße Anordnung deutlich weniger nachteilig als bei einer vorbekannte Gewichtskraftabstützung unterhalb des Generators.

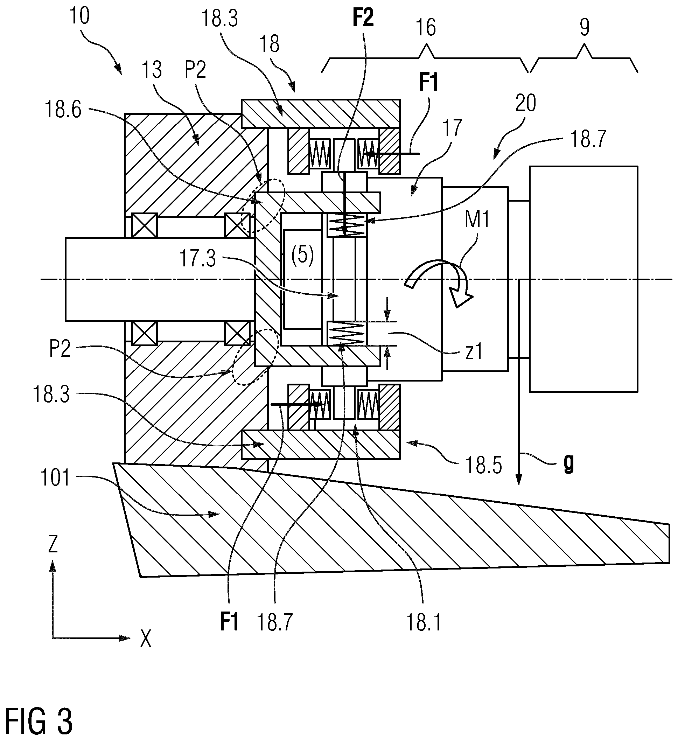

In **Fig. 3** ist ein zweites Ausführungsbeispiel der Triebstranglagerungsanordnung 10 gezeigt, bei welchem die Momentenabstützung 18 auch eine weitere Abstützeinheit 18.6 umfasst, welche in den Bereichen bzw. Punkten P2 am ersten Gehäuse 13 abgestützt ist, und mittels welcher eine im Wesentlichen vertikal (radial/tangential) bzw. in Umfangsrichtung ausgerichtete Abstützkraft **F2,** welche gegen ein (Antriebs-)Drehmoment **M3** wirkt, auf das Getriebegehäuse ausgeübt werden kann (mit daraus resultierendem Abstützmoment **M2),** insbesondere ebenfalls bereitgestellt durch wenigstens ein Kräftepaar an zumindest annähernd gegenüberliegenden Umfangspositionen, insbesondere bei intermediärer Zwischenschaltung wenigstens einer einstellbaren Einheit umfassend wenigstens eine Vorspanneinheit in wenigstens einem Kupplungsabschnitt zwischen interagierenden Kupplungsteilen 17.3, 18.6. Auch bezüglich dieser Abstützkraft **F2** kann über eine/die entsprechende einstellbare Einheit 18.1 bzw. mittels einzelner Vorspann- oder Entkopplungselemente 18.7 wahlweise eine vordefinierte Art der Abstützung bzw. Kraftentfaltung oder auch eine aktive Regelung implementiert sein, beispielsweise auch basierend auf momentanen Messwerten wenigstens eines Kraft-/Wegsensors 19. Die Kraftübertragung erfolgt beispielsweise jeweils zwischen dem Rotorlagergehäuse und radial vorstehenden Flanschabschnitten 17.1 oder dergleichen Kraftangriffskranz oder -segment oder Zapfen am Getriebegehäuse bzw. zwischen dem Rotorlagergehäuse und einzelnen Kraftangriffssegmenten 17.3 am Getriebegehäuse, insbesondere Nasen oder Laschen oder Stegen.

Dabei kann die wenigstens eine einstellbare Einheit an unterschiedlichen Umfangspositionen sowohl für ein/das zumindest annähernd axial (bzw. parallel zur Triebstrangachse oder Rotationsachse) ausgerichtete Kräftepaar F1 als auch für ein/das zumindest annähernd tangential/radial (also orthogonal zur Rotationsachse) ausgerichtete Kräftepaar F2 bzw. für eine in der entsprechenden Wirkungsrichtung realisierte Schwingungsdämpfung sorgen. Vorteilhaft greifen die entsprechenden Vorspann- und Abstützeinheiten dabei wenigstens sowohl auf zumindest annähernd 12Uhr und 06Uhr Umfangsposition als auch zumindest annähernd auf 03Uhr und 09Uhr Umfangsposition an (insbesondere diametral gegenüberliegend), bzw. an vier jeweils um zumindest 90° in Umfangsrichtung versetzten Umfangspositionen, wobei die jeweilige Umfangsposition auch ein Umfangssegment oder -bereich von z.B. 10-15° sein kann, je nach Ausgestaltung des entsprechenden Kupplungsabschnitts. Bevorzugt sind mehrere einstellbare Einheiten vorgesehen, die jeweils eine individuelle Wirkungsrichtung und Feder-/Dämpfercharakteristik aufweisen und wahlweise auch individuell einstellbar, steuerbar und/oder regelbar sind. Dies begünstigt ein sehr individuelles situationsbedingtes Reagieren auf momentane dynamische und auch triebstrangspezifische Belastungen in mehreren oder gar in allen Raumrichtungen.

Anders ausgedrückt: Zusätzlich zu den Abstützeinheiten/-elementen für die Aufrichtkraft kann ein weiterer Vorteil mittels der Momentenabstützung erzielt werden, indem auch wenigstens zwei weitere Abstützelemente, die in vertikaler Richtung wirken sich und ebenfalls am Rotorlagergehäuse abstützen, mittels der Momentenabstützung kombiniert eingesetzt werden. Durch die Führung der Rotorwelle über die Rotorwellenlager im Rotorlagergehäuse erfährt diese in funktionaler Hinsicht als Drehmoment-Abstützung zu bezeichnende zusätzliche Abstützung die gleichen Relativbewegungen wie eine Getriebedrehmomentstütze, und dabei entstehen auch keine Zusatzlasten aus der Aufnahme der Nicklasten der Anlagenrotorblätter. Insofern liefert eine solche funktionale Integration in bzw. Doppelfunktion der Momentenabstützung ein besonders schlankes und kraft-/momenten- /bewegungstolerantes Design.

Dabei kann der in den Fig. 2 und 3 dargestellte Maschinenträger (Basis) auch deutlich kürzer ausgestaltet sein bzw. im Vergleich zu der bisher insbesondere bei Windenergieanlagen üblichen axialen Erstreckung deutlich eingekürzt werden (kein zusätzlicher Abstützpunkt unterhalb des zweiten Gehäuses/Getriebegehäuses oder des Generators); denn die Verbindung zur Basis kann vorteilhafter Weise im Bereich des Rotorlagergehäuses (erstes Gehäuse) erfolgen, wahlweise ausschließlich dort.

Dieser zusätzliche Vorteil wird hier durch den hier gepunktet dargestellten Bereich des Maschinenträgers lediglich beispielhaft veranschaulicht. Auch die Verbindung des Maschinenträgers zu einem Turm oder dergleichen darunter liegende Stütze kann demnach schlanker ausgeführt werden. Auch insofern potenzieren sich die hier beschriebenen Materialeinsparungsmöglichkeiten zu Gunsten eines schlanken Designs.

In Fig. 3 ist auch ein Höhentoleranzlagerungsabschnitt z1 angedeutet; je nach gewünschtem Bewegungsfreiheitsgrad kann der Bewegungsfreiraum in vertikaler Richtung konstruktiv beschränkt und/oder durch Vorspanneinheiten oder dergleichen aktiv und/oder passiv generierte Gegenkräfte limitiert sein/werden. Der Fachmann kann diesen Bewegungsfreiraum z1 je Anwendungsfall individuell optimieren, insbesondere auch in Kombination mit einer integrierten Dämpfungsfunktion.

Unter Bezugnahme auf die unterschiedlichen Momentenwirkungsachsen kann beim Ausführungsbeispiel gemäß Fig. 3 auch von wenigstens zwei unterschiedlichen einstellbaren Einheiten 18.1 gesprochen werden, die zum Erzeugen von wenigstens zwei unterschiedlichen Gegenmomenten realisiert sind.

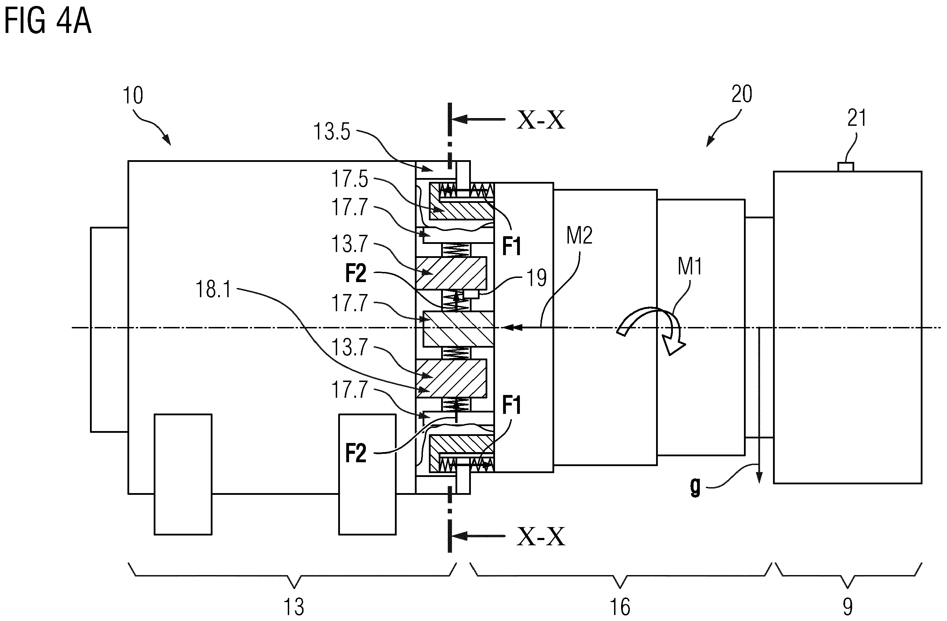

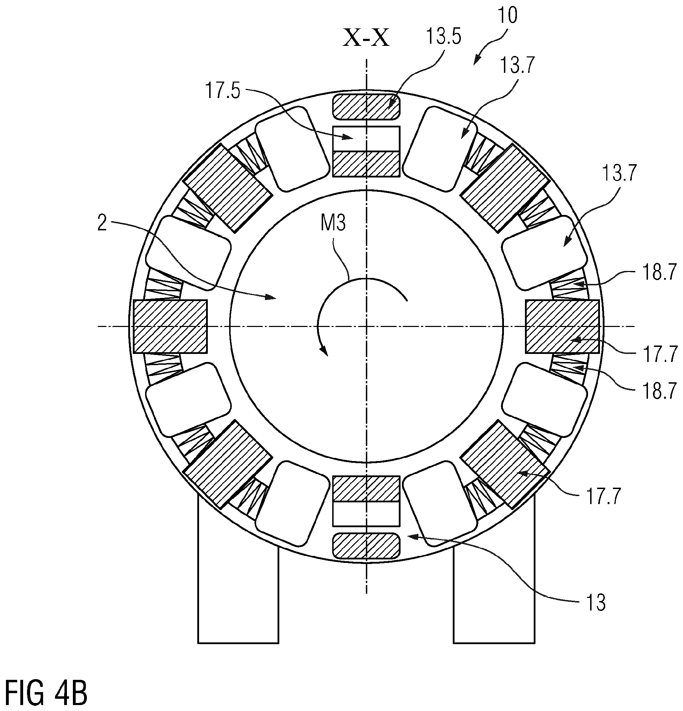

In den **Fig. 4** ist ein weiteres Ausführungsbeispiel der Triebstranglagerungsanordnung 10 gezeigt, bei welchem die Momentenabstützung 18 ebenfalls sowohl eine Kippmomentenabstützung als auch eine Drehmomentenabstützung umfasst. Die Kraftübertragung erfolgt beispielsweise jeweils zwischen Zugankern 13.5 am Rotorlager(gehäuse) und Zugankern 17.5 am Getriebe(gehäuse) bzw. zwischen Zapfen/Nocken 13.7 am Rotorlager(gehäuse) und Zapfen/Nocken 17.7 am Getriebe(gehäuse). Das Ineinandergreifen der beiden Gehäuse 13, 17 kann bei diesem Ausführungsbeispiel auch als eine Art Klauenkupplung beschrieben/bezeichnet werden, bei welcher die beiden Gehäuse jeweils einen der Kupplungspartner bereitstellen, insbesondere indem die Kupplungselemente bzw. Klauen bzw. die zuvor weiter oben beschriebenen Zuganker und Zapfen integral einstückig am jeweiligen Gehäuse ausgebildet sind. Dies liefert nicht zuletzt auch hohe Robustheit und kann unnötige Relativbewegungen oder das Lockern von Teilen vermeiden. In **Fig. 4A** sind die ineinandergreifenden Zapfen/Nocken der beiden Getriebegehäuse gezeigt, und in **Fig. 4B** ist eine beispielhafte Verteilung der einzelnen Kraftübertragungsstellen in Umfangsrichtung dargestellt, wobei hier speziell jeweils sechs Schnittstellen für die beiden unterschiedlichen Abstütz- bzw. Momenten-/Kräftearten vorgesehen sind, also jeweils nach 60° Umfangswinkel wiederholt. Insbesondere die Zuganker können vorteilhafterweise auch symmetrisch, aber außermittig positioniert sein; hierdurch kann auch vorteilhaft eine Abstütz- und/oder Dämpffunktion auch in Gierrichtung (senkrecht zur Kipp- und Achsrichtung, also im Sinne einer Drehbewegung um die Turmachse) sichergestellt werden, so dass insbesondere auch die Planetenträgerlager bei Schwingungen z.B. in Gierrichtung entlastet werden.

Unter Bezugnahme auf die unterschiedlichen Momentenwirkungsachsen kann beim Ausführungsbeispiel gemäß Fig. 4 auch von wenigstens zwei unterschiedlichen einstellbaren Einheiten 18.1 gesprochen werden, die zum Erzeugen von wenigstens zwei unterschiedlichen Gegenmomenten realisiert sind.

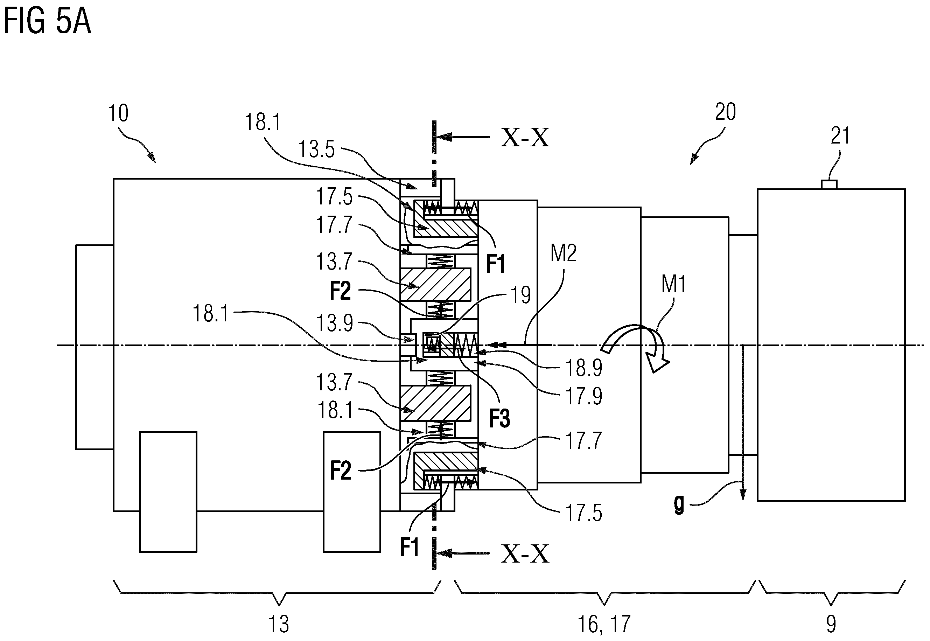

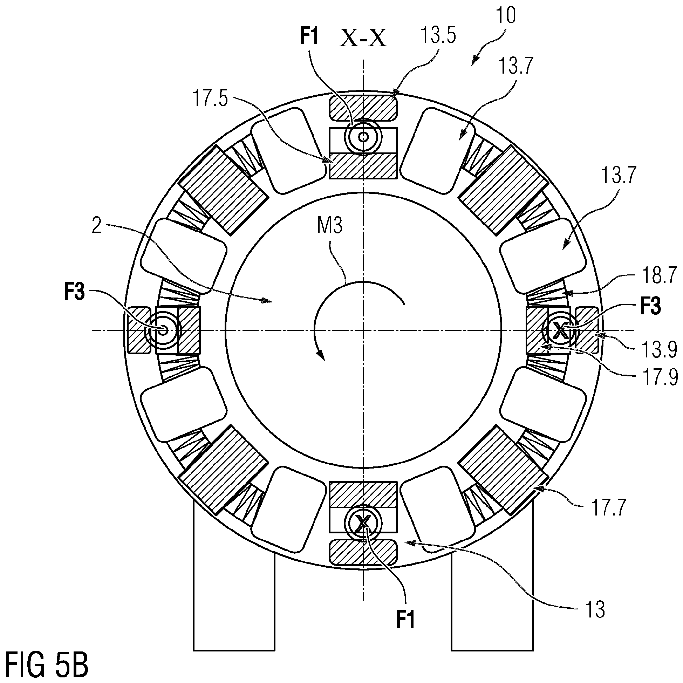

In den **Fig. 5** ist ein weiteres Ausführungsbeispiel der Triebstranglagerungsanordnung 10 gezeigt, bei welchem der Funktionsumfang der Momentenabstützung nicht nur eine Kippmomentabstützung sondern auch eine bei der gezeigten Implementierung besonders effektive Giermomentenabstützung umfasst. Diese Art und Weise der Abstützung ermöglicht auf besonders effektive Weise, Schwingungen z.B. um die Turmachse (Gierachse) abzufangen und zu dämpfen. Ebenso kann die einstellbare Einheit 18.1 in wirksamer Anordnung in 12Uhr- bzw. 6Uhr-Position effektiv dazu genutzt werden, Schwingungen z.B. um die Nick-/Kippachse abzufangen und zu dämpfen. In Fig. 5A sind die entsprechenden ineinandergreifenden Zapfen/Nocken 13.7, 17.7 der beiden Gehäuse gezeigt (vergleichbar zu den bereits im Zusammenhang mit den vorhergehenden Ausführungsbeispielen erläuterten Gehäusekupplungsteilen), zudem sind die Zuganker 13.5, 17.5 und die seitlichen Zug-/Druckanker 13.9, 17.9 in zwei zumindest annähernd orthogonal zueinander ausgerichteten Ebenen gezeigt, vergleiche dazu auch die Fig. 4B. In Fig. 5B ist eine beispielhafte Verteilung der einzelnen Kraftübertragungsstellen in Umfangsrichtung dargestellt, wobei hier speziell die Mehrfachfunktionalität der seitlichen bevorzugt maximal außermittigen Zug-/Druckanker 13.9, 17.9 gezeigt ist, nämlich als jeweilige Kraftübertragungsstellen sowohl in Umfangsrichtung als auch in axialer Richtung. Anders ausgedrückt: In Ergänzung zu den bereits zuvor weiter oben beschriebenen Komponenten der wenigstens einen einstellbaren Einheit 18.1 kann die Anordnung 10 auch die folgenden weiteren Komponenten umfassen, insbesondere jeweils als Bestandteil einer/der jeweiligen einstellbaren Einheit 18.1: seitliche Zug-/Druckanker 13.9 des Rotorlagergehäuses insbesondere im Bereich von 3Uhr und 9Uhr, seitliche Zug-/Druckanker 17.9 des Getriebegehäuses insbesondere im Bereich von 3Uhr und 9Uhr, weitere Vorspanneinheit 18.9 bzw. wenigstens ein entsprechend ausgerichtetes Entkopplungselement, insbesondere axial ausgerichtet. Hierdurch kann besonders effektiv auch einer Gierkraft F3 entgegengewirkt werden. Randnotiz: Die Kraft F3 ist gemäß der gezeigten Implementierung zwar wie die Kraft F1 eine im Wesentlichen in axialer Richtung ausgerichtete Kraft, wird hier gleichwohl mit einem anderen Bezugszeichen versehen, da das entsprechende Reaktionskräftepaar in Gegenmoment um eine andere Achse erzeugt als ein/das Reaktionskräftepaar gemäß den Kraftangriffspunkten der Kräfte F1. In diesem Sinne kann, unter Bezugnahme auf die unterschiedlichen Momentenwirkungsachsen, auch von wenigstens drei unterschiedlichen einstellbaren Einheiten 18.1 gesprochen werden, die beim Ausführungsbeispiel gemäß den Figuren 5 realisiert sind.

Es ist zu erwähnen, dass eine Giermomentenabstützung nicht notwendigerweise in der Art und Weise gemäß dem Ausführungsbeispiel der Figuren 5 erfolgen muss, sondern bereits dann realisiert werden kann, wenn die z.B. im Zusammenhang mit den Figuren 4 beschriebenen Zuganker 13.5, 17.5 leicht außermittig, also in einer Horizontalebene seitlich exzentrisch angeordnet werden, beidseitig von der Mittenhochachse des Triebstrangs bzw. der Welle 2. Jedoch bietet bzw. ermöglicht das in den Figuren 5 beschriebene Ausführungsbeispiel insbesondere aufgrund des größeren wirksamen Hebelarms eine effektivere Dämpfung. Insofern ist auch für die Zuganker 13.5, 17.5 eine von der in den Figuren jeweils dargestellten Umfangsposition abweichende Umfangsposition realisierbar. Die jedenfalls möglichst weit außermittig seitlichen Zug-/Druckanker 13.9, 17.9 sind hier gleichwohl mit einem anderen Bezugszeichen versehen, da an diesen Ankern bevorzugt auch eine Drehmomentenübertragung in Umfangsrichtung erfolgen können soll, vergleiche dazu die Kraftpfeile F2 in Fig. 5A.

### Bezugszeichenliste

- 1: Nabe
- 2: Welle, insbesondere Rotorwelle einer Windenergieanlage
- 3: Rotorlagergehäuse
- 4: Rotorlager/Rotorlagerung, insbesondere Momentenlagerung/Kegelrollenlagerung
- 5: Kupplung
- 6: Getriebe, insbesondere Industriegetriebe
- 7: Getriebegehäuse
- 8: Drehmomentstützeinheit bzw. Gewichtskraftabstützung mit Kopplung zur Basis
- 9: Generator
- 10: Triebstranglagerungsanordnung
- 13: Rotorlagergehäuse (erstes Gehäuse)
- 13.5: Zuganker Rotorlager(gehäuse) insbesondere im Bereich von 6Uhr und 12Uhr
- 13.7: Zapfen/Nocke Rotorlager(gehäuse)
- 13.9: seitliche Zug-/Druckanker Rotorlager(gehäuse) insbesondere im Bereich von 3Uhr und 9Uhr
- 14: Rotorlager/Rotorlagerung
- 16: Getriebekomponente, insbesondere mit Planetengetriebestufe
- 17: Getriebegehäuse (zweites Gehäuse)
- 17.1: radial vorstehender Flansch oder dergleichen Kraftangriffskranz oder -segment oder Zapfen
- 17.3: einzelnes Kraftangriffssegment an Getriebegehäuse, insbesondere Nase oder Lasche oder Steg
- 17.5: Zuganker Getriebe(gehäuse) insbesondere im Bereich von 6Uhr und 12Uhr
- 17.7: Zapfen/Nocke Getriebe(gehäuse)
- 17.9: seitliche Zug-/Druckanker Getriebe(gehäuse) insbesondere im Bereich von 3Uhr und 9Uhr
- 18: Momentenabstützung (Drehmoment- und/oder Kippmomentabstützung)
- 18.1: einstellbare Einheit
- 18.2: Vorspanneinheit (insbesondere axial), insbesondere mit wenigstens einer mechanischen Feder
- 18.3: Abstützeinheit, insbesondere ring- oder (halb-)schalenförmig
- 18.5: Diagonalverschaltung
- 18.6: weitere Abstützeinheit, insbesondere ring- oder (halb-)schalenförmig
- 18.7: weitere Vorspanneinheit (bzw. Entkopplungselement), insbesondere radial ausgerichtet
- 18.9: weitere Vorspanneinheit (bzw. Entkopplungselement), insbesondere axial ausgerichtet
- 19: Kraft-/Weg-Sensor
- 20: Industriegetriebe
- 21: Beschleunigungssensor
- 100: Windenergieanlage
- 101: Maschinenträger oder dergleichen Basis
- 102: Turm
- F1: Aufrichtkraft
- F2: Abstützkraft
- F3: Gierkraft bzw. entsprechende systemseitige Reaktionskraft
- g: Gewichtskraft
- M1: Kippmoment
- M2: Abstützmoment
- M3: (Antriebs-)Drehmoment
- P1: erster Abstützpunkt/-bereich am Rotorlagergehäuse
- P2: zweiter Abstützpunkt/-bereich am Rotorlagergehäuse
- z1: Höhentoleranzlagerungsabschnitt

## Patentansprüche

1. Windenergieanlage (100) mit einem Industriegetriebe (20), insbesondere mit Planetengetriebestufe, insbesondere für einen doppelt gelagerten oder momentengelagerten Rotor der Windenergieanlage, aufweisend:
- eine in einem ersten Gehäuse (13) abgestützte/abstützbare Lagerung (14) für eine Welle (2) des Triebstrangs und
- eine von einem zweiten Gehäuse (17) umgebene und an die Welle (2) gekuppelte/gekoppelte und mit einer Planetengetriebestufe ausgeführte Getriebekomponente (16),
- einen an dem zweiten Gehäuse (17) abgestützten Generator (9), wobei die Getriebe-Generatorkombination als im Raum schwebendes freies Ende der Triebstrangs angeordnet ist und
- eine zwischen dem ersten und dem zweiten Gehäuse (13, 17) als mechanisch/hydraulische Brücke vorgesehene Momentenabstützung (18), welche einem seitens der Getriebekomponente (16) auf die Welle (1) wirkenden schwerkraftbegründeten (Kipp- )Moment (M1) entgegenwirkt;
wobei die Momentenabstützung (18) am ersten Gehäuse (13) befestigt ist, wobei die Momentenabstützung (18) wenigstens eine einstellbare Einheit (18.1) aufweist.

2. Windenergieanlage (100) nach Anspruch 1 **dadurch gekennzeichnet, dass** die wenigstens eine einstellbare Einheit an wenigstens einem Umfangspositionspaar, insbesondere bei 06 und 12Uhr und/oder bei 03 und 09Uhr, ein erstes im Wesentlichen axial ausgerichtetes Kräftepaar (F1) um die axiale Mitte des Triebstrangs generiert, insbesondere ein gegen Kipp- und/oder Gier-Momente gerichtetes Kräftepaar (F1); und/oder dass die wenigstens eine einstellbare Einheit an wenigstens einem Umfangspositionspaar, insbesondere bei 03 und 09Uhr und/oder bei 06 und 12Uhr, ein zweites im Wesentlichen radial/tangential ausgerichtetes drehmomenterzeugendes Kräftepaar (F2) orthogonal zur axialen Mitte des Triebstrangs wirkend generiert, insbesondere ein gegen Drehmomente gerichtetes Kräftepaar (F2).

3. Windenergieanlage (100) nach Anspruch 1 oder 2 **dadurch gekennzeichnet, dass** die wenigstens eine einstellbare Einheit an wenigstens zwei gegenüberliegenden Umfangspositionen in wenigstens einem Kupplungsabschnitt zwischen interagierenden Kupplungsteilen eine Schwingungsdämpfung oder Schwingungsentkopplung sicherstellt, insbesondere mittels wenigstens einer Vorspanneinheit je Umfangsposition.

4. Windenergieanlage (100) nach einem der vorhergehenden Ansprüche **dadurch gekennzeichnet, dass** die wenigstens eine einstellbare Einheit (18.1) an wenigstens zwei gegenüberliegenden vordefinierten Umfangspositionen, insbesondere zumindest an den Umfangspositionen 06 und 12Uhr und/oder bei 03 und 09Uhr, federnd und/oder dämpfend zwischen Zugankern oder Zug-/Druckankern jeweils des Getriebegehäuses und des Rotorlagergehäuses wirkt bzw. dort wirkend verbaut ist.

5. Windenergieanlage (100) nach einem der vorhergehenden Ansprüche **dadurch gekennzeichnet, dass** die Triebstranglagerungsanordnung eine Mehrzahl von einstellbaren Einheiten umfasst, mittels welchen Reaktionskräftepaare um alle drei Momentenachsen bzw. dreidimensional wirkend um alle drei Raumrichtungen bereitgestellt sind und wahlweise auch aktiv eingestellt werden.

6. Windenergieanlage (100) nach einem der vorhergehenden Ansprüche **dadurch gekennzeichnet, dass** die Momentenabstützung (18) unabhängig von irgendeiner Verbindung zu einem unterhalb des Triebstrangs oder unterhalb der Triebstranglagerungsanordnung (10) angeordneten Maschinenträger oder dergleichen Basis (101) ausschließlich am ersten Gehäuse (13) abgestützt ist.

7. Windenergieanlage (100) nach einem der vorhergehenden Ansprüche **dadurch gekennzeichnet, dass** die Momentenabstützung (18) in entlang eines äußeren Anschlussdurchmessers zwischen erstem und zweitem Gehäuse angeordneten Abstützpunkten/-bereichen am ersten Gehäuse (13) abgestützt ist, insbesondere in wenigstens vier Umfangsabschnitten oder vollumfänglich, insbesondere bei rotationssymmetrischer Verteilung der Abstützpunkte/-bereiche über den gesamten Umfang; und/oder wobei das erste und/oder das zweite Gehäuse (13, 17) zumindest teilweise wenigstens einen Kupplungspartner zur gegenseitigen Abstützung der Gehäuse aneinander bereitstellt, insbesondere in einstückig integraler Ausgestaltung an einer Außenmantelfläche des jeweiligen Gehäuses.

8. Windenergieanlage (100) nach einem der vorhergehenden Ansprüche **dadurch gekennzeichnet, dass** die wenigstens eine einstellbare Einheit (18.1) eine hinsichtlich Kraft und/oder Wirkungsrichtung und/oder Kraftangriffspunkt/-bereich einstellbare Einheit ist.

9. Windenergieanlage (100) nach einem der vorhergehenden Ansprüche **dadurch gekennzeichnet, dass** die Momentenabstützung (18), insbesondere die wenigstens eine einstellbare Einheit (18.1) der Momentenabstützung, in einem oberen Bereich und/oder in einem unteren Bereich einer Schnittstelle zwischen den Gehäusen (13, 17) vorgesehen ist; und/oder wobei die Momentenabstützung (18), insbesondere die wenigstens eine einstellbare Einheit (18.1), diagonal verschaltet ist, insbesondere derart dass ein hydraulischer oder mechanischer Ausgleich in axialer Richtung relativ weich(er) und in Kipp-Richtung relativ steif(er) ist.

10. Windenergieanlage (100) nach einem der vorhergehenden Ansprüche **dadurch gekennzeichnet, dass** am zweiten Gehäuse (17) ein radial vorstehender Flansch oder dergleichen Kraftangriffskranz oder -segment (17.1) vorgesehen ist, welcher/welches von der Momentenabstützung (18), insbesondere von der einstellbaren Einheit (18.1), an wenigstens einer Axialposition begrenzt oder umgriffen ist, insbesondere ringartig.

11. Windenergieanlage (100) nach einem der vorhergehenden Ansprüche **dadurch gekennzeichnet, dass** die Momentenabstützung (18) derart angeordnet ist, dass eine im Wesentlichen axial und entgegen dem Kippmoment wirkende Aufrichtkraft (F1) am zweiten Gehäuse (17) angreifend bereitgestellt ist/wird; und/oder wobei die Momentenabstützung (18) derart angeordnet ist, dass eine im Wesentlichen axial aber symmetrisch außermittig einem Giermoment entgegenwirkende Abstützkraft (F1) am zweiten Gehäuse (17) angreifend bereitgestellt ist/wird.

12. Windenergieanlage (100) nach einem der vorhergehenden Ansprüche **dadurch gekennzeichnet, dass** die Momentenabstützung (18) eine auf das erste Gehäuse (13) wirkende Abstützeinheit (18.3) umfasst, welche derart angeordnet ist, dass eine im Wesentlichen vertikal oder in Umfangsrichtung wirkende Kraft am zweiten Gehäuse (17) angreifend bereitgestellt ist/wird.

13. Windenergieanlage (100) nach einem der vorhergehenden Ansprüche **dadurch gekennzeichnet, dass** die Getriebekomponente (16) zwischen der Welle (2) und einem Generator (9) angeordnet ist, welcher am zweiten Gehäuse (17) oder an der Getriebekomponente (16) angreift.

14. Verfahren zum Einstellen einer Lagerung einer Windenergieanlage mit einem Industriegetriebe nach einem der Ansprüche 1 bis 13, insbesondere bei einem Triebstrang mit doppelt gelagertem oder momentengelagertem Rotor einer Windenergieanlage (100), wobei eine in einem ersten Gehäuse (13) abgestützte Lagerung (14) einer Welle (2) des Triebstrangs und eine von einem zweiten Gehäuse (17) umgebene und an die Welle (2) gekoppelte Getriebekomponente (16) gegeneinander gelagert sind/werden, wobei mittels einer Momentenabstützung (18), welche einem auf die Welle (2) wirkenden und seitens der Getriebekomponente (16) schwerkraftbegründeten Moment (M1) entgegenwirkt, eine Abstützung des zweiten Gehäuses (17) und damit der Getriebekomponente am ersten Gehäuse (13) erfolgt, insbesondere bei einem Triebstrang mit am zweiten Gehäuse (17) abgestützten Generator (9), wobei mittels wenigstens einer zwischen dem ersten und zweiten Gehäuse (13, 17) wirkenden einstellbaren Einheit (18.1) eine aktive kraft- und/oder weggesteuerte Regelung einer auf das zweite Gehäuse (17) ausgeübten und über das erste Gehäuse (13) abgeleiteten Aufrichtkraft (F1) oder Abstützkraft (F2) erfolgt, in einer Windenergieanlage mit einem Industriegetriebe nach einem der Ansprüche 1 bis 13.

15. Verfahren nach dem vorhergehenden Verfahrensanspruch, wobei mittels der wenigstens einen einstellbaren Einheit an wenigstens zwei gegenüberliegenden Umfangspositionen in wenigstens einem Kupplungsabschnitt zwischen interagierenden Kupplungsteilen eine Schwingungsdämpfung oder Schwingungsentkopplung erfolgt, insbesondere mittels wenigstens einer Vorspanneinheit je Umfangsposition.

16. Verfahren nach einem der vorhergehenden Verfahrensansprüche, wobei mittels der wenigstens einen einstellbaren Einheit (18.1) die aktive kraft- und/oder weggesteuerte Regelung einer/der Aufrichtkraft (F1) oder Abstützkraft (F2) basierend auf momentanen Messwerten wenigstens eines im Triebstrang verbauten Kraft-/Weg-Sensors (19) und/oder Beschleunigungssensors (21) erfolgt.

## Claims

1. Wind power installation (100) having an industrial transmission (20), in particular having a planetary gear stage, in particular for a rotor with double mounting or momentum mounting of the wind power installation, having:
- a mounting (14) for a shaft (2) of the drive train, which mounting is supported/able to be supported in a first housing (13);
- a transmission component (16) which is surrounded by a second housing (17) and coupled to the shaft (2) and configured with a planetary gear stage;
- a generator (9) supported on the second housing (17), wherein the transmission-generator combination is arranged as a free end of the drive train floating in space, and
- a torque support (18) which is provided as a mechanical/hydraulic bridge between the first and the second housing (13, 17) and counteracts a gravity-induced (tilting moment) torque (M1) which acts on the shaft (1) by means of the transmission component (16);
wherein the torque support (18) is fastened to the first housing (13), wherein the torque support (18) has at least one adjustable unit (18.1).

2. Wind power installation (100) according to Claim 1, **characterized in that** the at least one adjustable unit on at least one circumferential position pairing, in particular at 6 and 12 o'clock and/or at 3 and 9 o'clock, generates a first force pair (F1) which is substantially axially aligned about the axial centre of the drive train, in particular a force pair (F1) that is directed counter to tilting and/or yawing moments; and/or **in that** the at least one adjustable unit on at least one circumferential position pairing, in particular at 3 and 9 o'clock and/or at 6 and 12 o'clock, generates a second torque-generating force pair (F2) which is substantially radially/tangentially aligned and acts orthogonally in relation to the axial centre of the drive train, in particular a force pair (F2) that is directed counter to torques.

3. Wind power installation (100) according to Claim 1 or 2, **characterized in that** the at least one adjustable unit on at least two mutually opposite circumferential positions ensures vibration damping or vibration decoupling between interacting coupling parts in at least one coupling portion, in particular by means of at least one pre-tensioning unit per circumferential position.

4. Wind power installation (100) according to one of the preceding claims **characterized in that** the at least one adjustable unit (18.1) on at least two mutually opposite predefined circumferential positions, in particular at least on the circumferential positions 6 and 12 o'clock and/or at 3 and 9 o'clock, acts, or is installed there so as to act, in each case in a resilient and/or damping manner between traction members or traction members/compression tappet of the transmission housing and of the rotor bearing housing.

5. Wind power installation (100) according to one of the preceding claims, **characterized in that** the drive train mounting assembly comprises a plurality of adjustable units by means of which reactive force pairs acting about all three momentum axes, or acting three-dimensionally about all three spatial directions, are provided and optionally are also actively adjusted.

6. Wind power installation (100) according to one of the preceding claims, **characterized in that** the torque support (18) is supported exclusively on the first housing (13), independently of any connection to a machine support or similar base (101) disposed below the drive train or below the drive train mounting assembly (10).

7. Wind power installation (100) according to one of the preceding claims, **characterized in that** the torque support (18) is supported on the first housing (13) in support points/regions disposed along an outer connection diameter between the first and the second housing, in particular in at least four circumferential portions or fully circumferentially, in particular in the case of a rotationally symmetrical distribution of the support points/regions across the entire circumference; and/or wherein the first and/or the second housing (13, 17) provide/provides at least partially at least one coupling partner for the mutual support of the housing on one another, in particular in an integral design embodiment in one piece on an external shell face of the respective housing.

8. Wind power installation (100) according to one of the preceding claims, **characterized in that** the at least one adjustable unit (18.1) is a unit which is adjustable in terms of force and/or direction of action and/or force-engagement point/region.

9. Wind power installation (100) according to one of the preceding claims, **characterized in that** the torque support (18), in particular the at least one adjustable unit (18.1) of the torque support, is provided in an upper region and/or in a lower region of an interface between the housings (13, 17); and/or wherein the torque support (18), in particular the at least one adjustable unit (18.1), is diagonally connected, in particular in such a manner that a hydraulic or mechanical compensation is relatively soft(er) in the axial direction and relatively stiff(er) in the tilting direction.

10. Wind power installation (100) according to one of the preceding claims, **characterized in that** a radially projecting flange or similar force-engagement collar or segment (17.1), which is delimited or encompassed, in particular in an annular manner, on at least one axial position by the torque support (18), in particular by the adjustable unit (18.1), is provided on the second housing (17).

11. Wind power installation (100) according to one of the preceding claims, **characterized in that** the torque support (18) is disposed in such a manner that an erection force (F1) acting substantially axially and counter to the tilting moment is provided so as to engage on the second housing (17); and/or wherein the torque support (18) is disposed in such a manner that a supporting force (F1) which acts substantially axially but symmetrically eccentrically so as to counteract a yawing moment is provided so as to engage on the second housing (17).

12. Wind power installation (100) according to one of the preceding claims, **characterized in that** the torque support (18) comprises a support unit (18.3) which acts on the first housing (13) and is disposed in such a manner that a force that acts substantially vertically or in the circumferential direction is provided so as to engage on the second housing (17).

13. Wind power installation (100) according to one of the preceding claims, **characterized in that** the transmission component (16) is disposed between the shaft (2) and a generator (9) which engages on the second housing (17) or on the transmission component (16).

14. Method for adjusting a mounting of a wind power installation having an industrial transmission according to one of Claims 1 to 13, in particular in a drive train having a rotor with double mounting or momentum mounting of a wind power installation (100), wherein a mounting (14) of a shaft (2) of the drive train which is supported in a first housing (13), and a transmission component (16) which is surrounded by a second housing (17) and coupled to the shaft (2), are mounted in relation to one another, wherein supporting the second housing (17) and thus the transmission component on the first housing (13) is performed by means of a torque support (18) that counteracts a gravity-induced torque (M1) which acts on the shaft (2) by means of the transmission component (16), in particular in a drive train having a generator (9) which is supported on the second housing (17), wherein an active force-controlled and/or path-controlled feedback-control of an erection force (F1) or supporting force (F2) exerted on the second housing (17) and dissipated by way of the first housing (13) is performed by means of at least one adjustable unit (18.1) that acts between the first and the second housing (13, 17), in a wind power installation having an industrial transmission according to one of Claims 1 to 13.

15. Method according to the preceding method claim, wherein vibration damping or vibration decoupling is performed on at least two mutually opposite circumferential positions in at least one coupling portion between interacting coupling parts by means of the at least one adjustable unit, in particular by means of at least one pre-tensioning unit per circumferential position.

16. Method according to one of the preceding method claims, wherein the active force-controlled and/or path-controlled feedback-control of a/the erection force (F1) or supporting force (F2) is performed by means of the at least one adjustable unit (18.1) based on momentary measured values of at least one force/path sensor (19) and/or acceleration sensor (21) installed in the drive train.

## Revendications

1. Eolienne (100) avec une transmission industrielle (20), en particulier avec un étage de train épicycloïdal, en particulier pour un rotor à double montage ou à couple de l'éolienne, comportant :
- un palier (14) soutenu/pouvant être soutenu dans un premier boîtier (13) pour un arbre (2) de la chaîne cinématique et
- un composant (16) de transmission entouré par un deuxième boîtier (17) et accouplé/couplé à l'arbre (2) et réalisé avec un étage de train épicycloïdal,
- un générateur (9) soutenu sur le deuxième boîtier (17), la combinaison de transmission-générateur étant disposée en tant qu'une extrémité libre flottante dans l'espace de la chaîne cinématique, et
- un support de couple (18) prévu entre le premier et le deuxième boîtier (13, 17) en tant que pont mécanique/hydraulique, lequel contrecarre un couple (de basculement) (M1) justifié par la gravité agissant sur l'arbre (1) du côté du composant (16) de transmission ;
le support de couple (18) étant fixé sur le premier boîtier (13), le support de couple (18) comportant au moins une unité (18.1) réglable.

2. Eolienne (100) selon la revendication 1, **caractérisée en ce que** l'au moins une unité réglable génère, sur au moins une paire de positions périphériques, en particulier à 06 et 12 heures et/ou à 03 et 09 heures, une première paire de forces (F1) dirigée sensiblement axialement autour du centre axial de la chaîne cinématique en particulier une paire de forces (F1) dirigée contre des couples de basculement et/ou de lacet ; et/ou que l'au moins une unité réglable génère, sur au moins une paire de positions périphériques, en particulier à 03 et 09 heures et/ou à 06 et 12 heures, une deuxième paires de forces (F2) de production de couple de rotation dirigée sensiblement radialement/tangentiellement de manière orthogonale au centre axial de la chaîne cinématique, en particulier une paire de forces (F2) dirigée à l'encontre de couples de rotation.

3. Eolienne (100) selon la revendication 1 ou 2, **caractérisée en ce que** l'au moins une unité réglable assure un amortissement d'oscillations ou un découplage d'oscillations sur au moins deux positions périphériques opposées dans au moins une section de couplage entre des parties de couplage en interaction, en particulier au moyen d'au moins une unité de précontrainte par position périphérique.

4. Eolienne (100) selon l'une des revendications précédentes, **caractérisée en ce que** l'au moins une unité réglable (18.1) agit ou est montée pour agir à cet endroit sur au moins deux positions périphériques prédéfinies opposées, en particulier au moins sur les positions périphériques à 06 et 12 heures et/ou à 03 et 09 heures, sur ressorts et/ou par amortissement entre des ancrages de traction ou des ancrages de traction/pression respectivement du boîtier de transmission et du boîtier de palier de rotor.

5. Eolienne (100) selon l'une des revendications précédentes, **caractérisée en ce que** l'ensemble de palier de chaîne cinématique comprend une multitude d'unités réglables, au moyen desquelles des paires de forces de réaction sont fournies autour de la totalité des trois directions spatiales en agissant autour de la totalité des trois axes de couple ou de manière tridimensionnelle et sont réglées au choix également activement.

6. Eolienne (100) selon l'une des revendications précédentes, **caractérisée en ce que** le support de couple (18) est supporté exclusivement sur le premier boîtier (13) indépendamment d'une quelconque liaison avec un porte-machine disposé en dessous de la chaîne cinématique ou en dessous de l'ensemble de palier (10) de chaîne cinématique ou de la base (101) similaire.

7. Eolienne (100) selon l'une des revendications précédentes, **caractérisée en ce que** le support de couple (18) est supporté sur le premier boîtier (13) dans des points/zones de support disposé(e)s entre un premier et un deuxième boîtier le long d'un diamètre de raccordement extérieur, en particulier dans au moins quatre sections périphériques ou sur la totalité de la périphérie, en particulier lors de la répartition symétrique en rotation des points/zones de support sur la totalité de la périphérique ; et/ou le premier et/ou le deuxième boîtier (13, 17) fournissant au moins en partie au moins un partenaire de couplage pour le support mutuel des boîtiers l'un sur l'autre, en particulier sur une surface enveloppante extérieure du boîtier respectif dans une configuration intégrale d'un seul tenant.

8. Eolienne (100) selon l'une des revendications précédentes, **caractérisée en ce que** l'au moins une unité (18.1) réglable est une unité réglable quant à la force et/ou la direction d'action et/ou le point/la zone d'attaque de force.

9. Eolienne (100) selon l'une des revendications précédentes, **caractérisée en ce que** le support de couple (18), en particulier l'au moins une unité réglable (18.1) du support de couple, est prévu dans une zone supérieure et/ou dans une zone inférieure d'une interface entre les boîtiers (13, 17) ; et/ou le support de couple (18), en particulier l'au moins une unité réglable (18.1), étant branché en diagonal, en particulier de telle manière qu'une compensation hydraulique ou mécanique est relativement (plus) souple dans la direction axiale et relativement (plus) rigide dans la direction de basculement.

10. Eolienne (100) selon l'une des revendications précédentes, **caractérisée en ce qu'**un flasque ou une couronne ou un segment d'attaque de force (17.1) similaire faisant saillie radialement est prévu sur le deuxième boîtier (17), lequel/laquelle est délimité(e) ou entouré(e) par le support de couple (18), en particulier par l'unité réglable (18.1), sur au moins une position axiale, en particulier à la manière d'un anneau.

11. Eolienne (100) selon l'une des revendications précédentes, **caractérisée en ce que** le support de couple (18) est disposé de telle manière qu'une force d'orientation (F1) agissant sensiblement axialement et à l'encontre du couple de basculement est fournie de manière à s'engager sur le deuxième boîtier (17) ; et/ou le support de couple (18) étant disposé de telle manière qu'une force de support (F1) contrecarrant un couple de lacet sensiblement axialement mais de manière excentrée symétriquement est fournie tout en s'engageant sur le deuxième boîtier (17).

12. Eolienne (100) selon l'une des revendications précédentes, **caractérisée en ce que** le support de couple (18) comprend une unité de support (18.3) agissant sur le premier boîtier (13), laquelle est disposée de telle manière qu'une force agissant sensiblement verticalement ou dans la direction périphérique est fournie de manière à s'engager sur le deuxième boîtier (17).

13. Eolienne (100) selon l'une des revendications précédentes, **caractérisée en ce que** la composante de transmission (16) est disposée entre l'arbre (2) et un générateur (9), qui s'engage sur le deuxième boîtier (17) ou sur la composante de transmission (16).

14. Procédé de réglage d'un support d'une éolienne avec une transmission industrielle selon l'une des revendications 1 à 13, en particulier pour une chaîne cinématique avec un rotor à double montage ou à couple d'une éolienne (100), un palier (14) supporté dans un premier boîtier (13) d'un arbre (2) de la chaîne cinématique et une composante de transmission (16) entourée par un deuxième boîtier (17) et couplée à l'arbre (2) étant montés l'un à l'encontre de l'autre, un support du deuxième boîtier (17) et ainsi du composant de transmission étant effectué sur le premier boîtier (13) au moyen d'un support de couple (18), qui contrecarre un couple (M1) agissant sur l'arbre (2) et justifié par la gravité du côté du composant de transmission (16), en particulier pour une chaîne cinématique avec un générateur (9) supporté sur le deuxième boîtier (17), une régulation active à force et/ou à distance commandée d'une force d'orientation (F1) ou d'une force de support (F2) exercée sur le deuxième boîtier (17) et dérivée au-dessus du premier boîtier (13) étant effectuée au moyen d'au moins une unité (18.1) réglable agissant entre le premier et le deuxième boîtier (13, 17), dans une éolienne avec une transmission industrielle selon l'une des revendications 1 à 13.

15. Procédé selon la revendication précédente, dans lequel un amortissement d'oscillations ou un découplage d'oscillations est effectué sur au moins deux positions périphériques opposées dans au moins une section de couplage entre des parties de couplage en interaction au moyen de l'au moins une unité réglable, en particulier au moyen d'au moins une unité de précontrainte par position périphérique.

16. Procédé selon l'une des revendications précédentes, la régulation active à force et/ou à distance commandée d'une/de la force d'orientation (F1) ou de la force de support (F2) étant effectuée sur la base de valeurs de mesure actuelles d'au moins un capteur de force/de distance (19) et/ou d'un capteur d'accélération (21) monté dans la chaîne cinématique au moyen de l'au moins une unité (18.1) réglable.
